# EUROPÄISCHE PATENTSCHRIFT

(11) **EP 2 707 639 B1**
(45) Veröffentlichungstag und Bekanntmachung des Hinweises auf die Patenterteilung: **14.01.2015**
(21) Anmeldenummer: 13739712.1
(22) Anmeldetag: 23.07.2013
(51) Int. Cl.: F16L 37/098

(54) **VERBINDUNGSEINRICHTUNG SOWIE VERBINDUNGSSYSTEM MIT EINER SOLCHEN**
CONNECTING DEVICE AND CONNECTING SYSTEM WITH SAME
DISPOSITIF DE JONCTION ET SYSTÈME DE JONCTION MUNI D'UN TEL DISPOSITIF

(30) Priorität: 24.07.2012 DE 102012016734; 22.01.2013 EP 13152247
(43) Veröffentlichungstag der Anmeldung: 19.03.2014
(73) Patentinhaber: WOCO Industrietechnik GmbH, 63628 Bad Soden-Salmünster (DE)
(72) Erfinder: LUDWIG, Uwe, 63628 Bad Soden-Salmünster (DE)
(74) Vertreter: Holzwarth-Rochford, Andreas
(86) Internationale Anmeldenummer: PCT/EP2013/065474
(87) Internationale Veröffentlichungsnummer: WO 2014/016275

(56) Entgegenhaltungen:
- WO-A1-01/79738
- DE-A1- 4 334 529
- DE-A1-102005 006 088
- FR-A1- 2 863 683
- US-B1- 7 566 079

## Beschreibung

Die vorliegende Erfindung betrifft eine Verbindungseinrichtung zur Verbindung zumindest zweier Rohrteile, wobei die Verbindungseinrichtung zumindest bereichsweise mit einem ersten Rohrteil verbunden ist und mittels der Verbindungseinrichtung eine lösbare Verbindung mit zumindest einem mit einem zweiten Rohrteil in Wirkverbindung stehenden Verbindungselement herstellbar ist, die Verbindungseinrichtung zumindest einen Verriegelungsring mit zumindest zwei elastisch bewegbaren und in radial innere Richtung des Verriegelungsrings vorstehende Rastnasen und zumindest einen Aktuatorring zur Bewegung der Rastnasen aus zumindest einer Verriegelungsposition, in der zumindest eine der Rastnasen Eingriff in das Verbindungselement findet, in zumindest eine Entriegelungsposition, in der der Eingriff gelöst ist, und umgekehrt, wobei die jeweilige Rastnase an einem ersten Ende über zumindest einen Rastarm federnd an dem Verrieglungsring gelagert ist und ein dem ersten Ende gegenüberliegendes zweites Ende der Rastnase frei beweglich ist.

Aus dem Stand der Technik ist eine Vielzahl solcher Verbindungseinrichtungen bekannt. So offenbart beispielsweise die DE 100 30 030 C1 eine Einrenkverbindung zwischen zwei Rohrteilen, insbesondere zwischen dem Rohransatz eines Anbohrgerätes oder einer Ventil-Armatur einerseits und dem Anschlussfitting einer Abzweigeleitung andererseits. Die Einrenkverbindung besteht aus einem Steckrohrteil einerseits und einem Aufnahmerohrteil andererseits. Zu ihnen gehört ein Nockenring, der aus einem Ringkörper mit wenigstens einem radial abragenden Nocken besteht. Der Aufnahmerohrteil besitzt eine axial offene Radialaussparung, an die sich eine axial geschlossene Kammer, der eine Steuerfläche zugeordnet ist, tagential anschließt. Es wird vorgeschlagen den Nocken gegenüber dem Ringkörper des Nockenrings radial beweglich zu machen und die Steuerkurve in der Kammer radial zu profilieren um beim Drehen des Nockenrings mit dem äußeren Radialumriss des Nockens zusammenzuwirken. Über den Nocken ist dann der Aufnahmerohrteil formschlüssig mit dem Steckrohrteil verbunden.

Die Nocken und die Radialaussparung müssen jedoch vor einer Verbindungsherstellung zunächst gegeneinander ausgerichtet werden, bevor sie nach Art eine Bajonettverschluss eine Verbindung der Rohrteile herstellen. Dies verkompliziert den Verbindungsprozess. Darüber hinaus ist die Ausbildung eines Hinterschnitts auf einer inneren Oberfläche des Aufnahmerohrteils notwendig, was den Herstellungsprozess der Einrenkverbindung verkompliziert, da der Einsatz von Schieberelementen in einem Formungsprozess notwendig wird. Ferner ermöglicht es die offenbarte Einrenkverbiridung nicht, von außen verlässlich zu erkennen, ob die Einrenkverbindung sich in einer Verrieglungsposition befindet oder nicht. Ferner ist die Verrieglungsposition nicht selbstsichernd ausgebildet.

Darüber hinaus offenbart die US 7,566,079 B1 eine gattungsgemäße Verbindungseinrichtung in Form einer Rohrkupplung. Diese ist dazu geeignet, thermoplastische Rohre mit einem metallischen Einlassanschluss zu verbinden. Wenn der Anschluss in die Kupplung eingeführt wird, wird eine Schnappverbindung durch eine Vielzahl von Verriegelungszähnen bereitgestellt, die sich nach radial innen durch das Gehäuse eines Bundes erstrecken und mit einer an dem Einlassanschluss ausgebildeten ringförmigen Auskragung in Eingriff kommen. Eine Lösung der Verbindung des Einlassanschlusses und des Rohres wird durch eine Drehung des Bundes in Bezug auf ein Gehäuse der Kupplung erreicht, indem eine auf dem Gehäuse ausgebildete Nockenlaufbahn mit den Verrieglungszähnen wechselwirken, um die Zähne nach radial außen zu bewegen und sie von der Auskragung zu lösen.

Nachteilig bei diese Verbindungseinrichtung ist jedoch, dass ein vergleichsweise hohes Drehmoment zur Lösung der Verbindung aufgebaut werden muss. Auch ist eine Vielzahl von Einzelelementen zur Bereitstellung der Rohrkupplung notwendig. So sind zumindest drei Einzelelemente in Form des Gehäuses, eines Befestigungsrings und des Bunds notwendig. Weiterhin offenbart die DE 195 51 223 A1 eine gattungsgemäße Verbindungseinrichtung. Diese hat jedoch den Nachteil, dass ihre Längsausdehnung vergleichsweise groß ist und so nicht an Stellen, an denen ein begrenzter Bauraum vorhanden ist, einsetzbar ist. So kann es nicht an Stellen, an denen Rohrleitungen gekrümmt verbaut sind, eingesetzt werden. Ferner weißt diese Verbindungseinrichtung einen komplizierten Ablauf auf.

Es ist daher Aufgabe der vorliegenden Erfindung, die aus dem Stand der Technik bekannten Verbindungseinrichtungen, insbesondere die gattungsgemäße Verbindungseinrichtung, derart weiter zu entwickeln, dass die Nachteile des Standes der Technik überwunden werden. Insbesondere soll eine Verbindungseinrichtung bereitgestellt werden, die einen konstruktiv einfachen Aufbau aufweist und leicht herstellbar ist, insbesondere um Herstellungskosten zu reduzieren, und gleichzeitig einen geringen Kraftaufwand für eine Betätigung notwendig macht und eine verlässliche Erkennung einer Verriegelungsposition und/oder einer Entriegelungsposition ermöglicht.

Diese Aufgabe wird erfindungsgemäß dadurch gelöst, dass im Bereich des zweiten Endes der jeweiligen Rastnase zumindest ein Führungselement angeordnet ist und das jeweilige Führungselement in zumindest einer von dem Aktuatorring umfassten Kulisse geführt ist und zwar derart, dass die Rastnase durch eine durch den Rastarm aufgebaute Federkraft in die Verrieglungsposition zwingbar ist und mittels einer Bewegung des Aktuatorrings relativ zu dem Verriegelungsring und/oder des Verriegelungsrings relativ zu dem Aktuatorring aus der Verriegelungsposition entgegen der Federkraft in die Entriegelungsposition zwingbar ist.

Dabei ist besonders bevorzugt, dass das erste Rohrteil mit dem Aktuatorring oder dem Verrieglungsring mittels zumindest einer ersten Verbindungsvorrichtung verbindbar ist.

Auch kann eine erfindungsgemäße Verbindungseinrichtung dadurch gekennzeichnet sein, dass das Verbindungselement mit dem zweiten Rohrteil, insbesondere mittels zumindest einer zweiten Verbindungsvorrichtung, verbunden ist, zumindest bereichsweise, vorzugsweise vollständig, in dem zweiten Rohrteil ausgebildet ist und/oder zumindest eine Aufnahme für die Rastnase, insbesondere umfassend zumindest eine Vertiefung, zumindest eine Nut und/oder zumindest einen Hinterschnitt, aufweist, wobei die Aufnahme vorzugsweise um das zweite Rohrteil vollständig umlaufend ausgebildet ist.

Weiterhin ist bevorzugt, dass das Verbindungselement zumindest ein erstes Anschlagelement für die Verbindungseinrichtung, insbesondere den Vernegelungsring und/oder den Aktuatorring, vorzugsweise zur Begrenzung einer Bewegung der Verbindungseinrichtung in eine axiale Richtung entlang einer ersten Achse, umfasst, wobei die erste Achse vorzugsweise einer Längsachse des ersten Rohrteils und/oder des zweiten Rohrteils und/oder oder einer Symmetrieachse des Aktuatorrings und/oder des Verriegelungsrings entspricht.

Auch schlägt die Erfindung vor, dass der Vernegelungsring zumindest bereichsweise radial außen auf den Aktuatorring aufsteckbar, aufschiebbar und/oder zumindest bereichsweise den Aktuatorring radial umgebend auf dem Aktutarring anordbar ist oder der Aktuatorring zumindest bereichsweise radial außen auf den Verriegelungsring aufsteckbar, aufschiebbar und/oder zumindest bereichsweise den Verriegelungsring radial umgebend auf dem Verriegelungsring anordbar ist, wobei der Aktuatorring und der Verriegelungsring vorzugsweise mittels zumindest einer dritten Verbindungsvorrichtung miteinander verbindbar sind, vorzugsweise derart, dass eine Bewegung in eine axiale Richtung der ersten Achse verhindert ist und eine Drehbewegung des Aktuatorrings relativ zu dem Verriegelungsring um die erste Achse ermöglich ist.

Eine weitere Ausführungsform der Erfindung sieht vor, dass der Verriegelungsring oder der Aktuatorring an zumindest einer Umfangsstelle mittels zumindest einer vierten Verbindungsvorrichtung öffnenbar und/oder schließbar ist, wobei vorzugsweise eine Vielzahl von Einzelsegmenten des Verrieglungsrings oder des Aktuatorrings vorgesehen ist, die insbesondere über eine Vielzahl von vierten Verbindungsvorrichtungen miteinander verbindbar sind.

Mit der Erfindung wird auch vorgeschlagen, dass die Rastnase und/oder der Rastarm zumindest in der Verriegelungsposition in eine Richtung entlang der ersten Achse durch zumindest ein zweites von dem Aktuatorring umfasstes Anschlagelement abgestützt ist und/oder mit dem zweiten Anschlagelement bei Aufbau einer Kraft auf die Verbindungseinrichtung in Richtung der ersten Achse in Kontakt gelangt, insbesondere die Rastnase, zumindest in der Verriegelungsposition, zumindest bereichsweise in zumindest eine in dem Aktuatorring ausgebildete Öffnung hineinragt und/oder durch die Öffnung hindurch ragt.

Besonders bevorzugt ist, dass der Rastarm und/oder die Rastnase sich im wesentlichen in eine Richtung senkrecht zu der ersten Achse und/oder tangential zu einer Umfangsrichtung des Verrieglungsrings und/oder Aktuatorrings erstreckt beziehungsweise erstrecken.

Eine weitere Ausführungsform der Erfindung schlägt vor, dass die Rastnasen zumindest eine Abschrägung in eine Richtung entlang der ersten Achse aufweist, insbesondere um eine Auslenkung der Rastnase und/oder des Rastarms aus der Verriegelungsposition durch ein Einschieben des zweiten Rohrteils in den Aktuatorring und/oder den Verriegelungsring entlang der ersten Achse zu erreichen.

Weiterhin kann eine Verbindungseinrichtung dadurch gekennzeichnet sein, dass das Führungselement zumindest einen sich parallel zu der ersten Achse erstreckenden Bolzen umfasst und/oder vorzugsweise zumindest zwei, vorzugsweise auf gegenüberliegenden Seiten, der Rastnase angeordnete Führungselemente vorgesehen sind.

Vorteilhafterweise kann vorgesehen sein, dass die Kulisse zumindest eine Führungsbahn, auf der das Führungselement aufliegt, insbesondere mittels der durch den Federarm aufgebauten Federkraft in Kontakt mit der Führungsbahn gezwungen ist, umfasst, wobei vorzugsweise die Führungsbahn bezüglich einer Umfangsrichtung um die erste Achse geneigt ist, insbesondere die Oberfläche der Führungsbahn, auf der das Führungselement aufliegt, in unterschiedlichen radialen Abständen zu der ersten Achse verläuft.

Die vorgenannte Ausgestaltung kann dadurch gekennzeichnet sein, dass die Neigung bezüglich der Umfangsrichtung um die erste Achse zumindest bereichsweise 5° bis 40°, vorzugsweise 10° bis 35°, bevorzugt 15° bis 20°, noch bevorzugter 20° bis 25° und am bevorzugtesten 22° beträgt, die Führungsbahn gewölbt entlang der Umfangsrichtung um die erste Achse ausgebildet ist und/oder die Neigung mit radialem Abstand zur ersten Achse abnimmt.

Bei den vorgenannten Ausführungsformen ist besonders bevorzugt, dass in der Oberfläche der Führungsbahn zumindest ein eine Parkposition der Verbindungseinrichtung, insbesondere des Vernegelungsrings, der Rastnase, des Rastarms und/oder des Führungselementes, bereitstellender Oberflächenkonturbereich ausgebildet ist, vorzugsweise die Oberfläche der Führungsbahn zur Bereitstellung der Parkposition bereichsweise ein gleichbleibenden radialen Abstand zu der ersten Achse aufweist und/oder der Abstand der Oberfläche der Führungsbahn von der ersten Achse von dem die Parkposition bereitstellenden Oberflächenkonturbereich ausgehend in beide Umfangsrichtungen der ersten Achse zumindest bereichsweise zunimmt.

Weiterhin wird für die Erfindung vorgeschlagen, dass der Aktuatorring, insbesondere die Kulisse, so ausgestaltet ist, dass der Aktuatorring zur Überführung der Rastnase aus der Verriegelungs- in die Entriegelungsposition über einen Winkelbereich von 2° bis 12°, bevorzugt von 4° bis 10°, noch bevorzugter von 5° bis 9°, noch mehr bevorzugt von 6° bis 8° und am bevorzugtesten von 7°, bewegt wird.

Auch wird vorgeschlagen, dass der Rastarm zumindest bereichsweise in eine Richtung entlang der ersten Achse durch die Kulisse abgestützt ist, insbesondere in einer Ebene senkrecht zu der ersten Achse zumindest bereichsweise flächig auf einer Oberfläche der Kulisse aufliegt.

Weiterhin kann vorgesehen sein, dass die erfindungsgemäße Verbindungseinrichtung gekennzeichnet ist durch zumindest eine Arretiereinrichtung zur Arretierung, insbesondere drehsicheren Arretierung bezüglich der ersten Achse, des Aktuatorrings relativ zu dem Verriegelungsring in zumindest einer ersten Arretierposition, insbesondere der Parkposition, wobei die Arretierposition vorzugsweise der Entriegelungsposition der Rastnasen entspricht.

Dabei ist besonders bevorzugt, dass die Arretiereinrichtung zumindest ein mit einem ersten Element drehmitnahmesicher verbundenes und/oder zumindest bereichsweise in dem ersten Element, vorzugsweise in eine Richtung entlang der ersten Achse bewegbar, gelagertes Arretierelement umfasst, wobei ein zweites Element mittels des Arretierelements in der Arretierposition relativ zu dem ersten Element arretiert ist, insbesondere das Arretierelement Eingriff in eine Ausnehmung des zweiten Elements findet und/oder das Arretierelement mittels zumindest einer Rückstelleinrichtung, wie zumindest einem Federelement, in Eingriff mit der Ausnehmung gezwungen ist.

Auch wird mit der Erfindung vorgeschlagen, dass die Arretiereinrichtung zumindest ein Auslöseelement zur Lösung der Arretierung des Aktuatorrings relativ zu dem Vernegelungsring, insbesondere zur Bewegung des Arretierelements aus dem Eingriff, vorzugsweise entgegen eine durch die Rückstelleinrichtung aufgebaute Rückstellkraft, umfasst.

Besonders bevorzugt ist dabei, dass das Auslöseelement und das Arretierelement zumindest bereichsweise einstückig ausgebildet sind.

Auch wird vorgeschlagen, dass das erste Element der Verriegelungsring ist und das zweite Element der Aktuatorring ist oder das erste Element der Aktuatorring ist und das zweite Element der Verrieglungsring ist.

Weiterhin kann eine Verbindungseinrichtung dadurch gekennzeichnet sein, dass das Auslöseelement zumindest bereichsweise auf einer dem Vernegelungsring abgewandten Seite des Aktuatorrings angeordnet ist, insbesondere das Auslöseelement durch den Aktuatorring zumindest bereichsweise hindurchreicht, vorzugsweise das Auslöseelement mit dem zweiten Rohrteil in Kontakt bringbar ist, insbesondere wenn die Arretiereinrichtung sich in der Arretierposition befindet.

Ferner wird mit der Erfindung vorgeschlagen, dass der Aktuatorring in der Arretierposition gegen die durch die durch die Rastarme aufgebaute Federkraft gegenüber dem Verriegelungsring vorgespannt ist.

Weiterhin schlägt die Erfindung vor, dass der Aktuatorring zumindest eine erste Markierung und der Verriegelungsring zumindest eine zweite Markierung aufweisen, wobei die erste Markierung und die zweite Markierung fluchtend zueinander angeordnet sind, wenn die Verbindungseinrichtung, insbesondere die Rastnase, sich in der Verrieglungsposition befindet, und/oder die erste Markierung und die zweite Markierung nicht fluchten, wenn sich die Verbindungseinrichtung, insbesondere die Rastnase, in der Entriegelungsposition, der Arretierposition und/oder der Parkposition befindet.

Eine erfindungsgemäße Verbindungseinrichtung kann gekennzeichnet sein durch zumindest einen koaxial zu dem Aktuatorring und/oder dem Verriegelungsring anordbaren Kontrollring, wobei der Kontrollring zumindest eine dritte Markierung aufweist, wobei insbesondere die dritte Markierung einerseits und die erste Markierung und/oder die zweite Markierung andererseits in der Verriegelungsposition der Verbindungseinrichtung miteinander fluchten und/oder in der Entriegelungsposition, der Arretierposition und/oder der Parkpositiön der Verbindungseinrichtung nicht fluchten.

Dabei ist besonders bevorzugt, dass der Kontrollring zumindest eine Ausnehmung zur zumindest bereichsweisen Aufnahme des Führungselementes und/oder des zweiten Endes der Rastnase umfasst, wobei die Ausnehmung vorzugsweise geneigt relativ zu einer radialen Richtung der ersten Achse verläuft.

Weiterhin kann die Verbindungseinrichtung gekennzeichnet sein durch zumindest einen koaxial zu dem Aktuatorring, dem Verriegelungsring und/oder dem Kontrollring anordbaren Abschlussring, wobei der Abschlussring zumindest ein Federhammerelement umfasst, das mittels des Führungselements aus einer Ruheposition in eine Auslöse- und/oder Indikatorposition überführbar ist, wobei die Ruheposition bei Vorliegen der Verrieglungsposition der Verbindungseinrichtung eingenommen wird und/oder die Auslöse- und/oder Indikatorposition bei Vorliegen der Entriegelungsposition, der Arretierposition und/oder der Parkposition der Verbindungseinrichtung eingenommen wird.

Bei der zuvor beschriebenen Ausbildung der Erfindung kann ferner vorgesehen sein, dass das Federhammerelement mittels einer federelastischen Lagerung in dem Abschlussring gelagert ist, wobei mittels der Lagerung eine das Federhammerelement in die Ruheposition zwingende Rückstellkraft aufbaubar ist und/oder das Federhammerelement in der Auslöse- und/oder Indikatorposition aus der Oberfläche des restlichen Bereichs des Abschlussrings hervorsteht, wobei das Federhammerelement, insbesondere in der Auslöse- und/oder Indikatorposition, derartig mit dem Führungselement und/oder Auslöseelement in Wirkverbindung steht, insbesondere an diesem bzw. diesen anliegt, dass durch eine, vorzugsweise durch eine, insbesondere zur federelastischen Lagerung zusätzlichen, auf das Federhammerelement wirkende Kraft hervorgerufene, Bewegung des Federhammerelements aus der Auslöse- und/oder Indikatorposition in die Ruheposition das Führungselement aus der Parkposition, insbesondere in die Verriegelungsposition, und/oder das Arretierelement aus der Arretierposition heraus bewegbar ist, wobei diese Bewegung vorzugsweise bei einer Bewegung des Abschlussrings und/oder des Federhammerelements gegen das Verbindungselement, insbesondere das erste Anschlagelement, erzeugbar ist.

Die beiden vorgenannten Ausführungsformen einer Verbindungseinrichtung können dadurch gekennzeichnet sein, dass der Abschlussring zumindest eine vierte Markierung aufweist, wobei insbesondere die vierte Markierung einerseits und die erste Markierung, die zweite Markierung und/oder die dritte Markierung andererseits in der Verriegelungsposition der Verbindungseinrichtung miteinander fluchten und/oder in der Entriegelungsposition, der Arretierposition und/oder der Parkposition der Verbindungseinrichtung nicht fluchten.

Bevorzugt ist, dass die erste Markierung, die zweite Markierung, die dritte Markierung und/oder die vierte Markierung zumindest eine Vertiefung, zumindest eine Erhebung, zumindest einen Aufdruck und/oder zumindest ein Relief umfasst.

Weiterhin kann vorgesehen sein, dass der Aktuatorring und/oder der Verriegelungsring zumindest eine Dichtvorrichtung, vorzugsweise umfassend zumindest einen O-Ring, umfasst und/oder mit der Dichtvorrichtung verbindbar ist, insbesondere zumindest eine Ausnehmung, wie zumindest eine Nut, zumindest eine Vertiefung und/oder zumindest einen Hinterschnitt zur Aufnahme der Dichtvorrichtung umfasst.

Schließlich wird für die Verbindungseinrichtung vorgeschlagen, dass die erste Verbindungvorrichtung, die zweite Verbindungsvorrichtung, die dritte Verbindungsvorrichtung und/oder die vierte Verbindungsvorrichtung zumindest eine Rastverbindung, zumindest eine Klemmverbindung, zumindest eine Adhäsionsverbindung, zumindest eine Clipsverbindung, zumindest eine Bajonettverbindung und/oder zumindest eine Schraubverbindung umfasst bzw. umfassen.

Weiterhin liefert die Erfindung ein Verbindungssystem umfassend zumindest eine mit zumindest einem ersten Rohrteil verbundene erfindungsgemäße Verbindungseinrichtung und zumindest ein mit zumindest einem zweiten Rohrteil verbindbare und/oder von dem zweiten Rohrteil zumindest bereichsweise, vorzugsweise vollständig, umfasstes Verbindungselement.

Der Erfindung liegt somit die überraschende Erkenntnis zugrunde, dass eine Verbindungseinrichtung so ausgestaltet werden kann, dass ein Kraftaufwand für eine Betätigung der Verbindungseinrichtung, insbesondere zur Überführung derselben von einer Verriegelungsposition in eine Entriegelungsposition und umgekehrt, dadurch reduziert werden kann, dass eine Betätigung einer Rastnase über zumindest ein Führungselement, das an einem frei bewegbaren Ende einer Rastnase angeordnet ist, erfolgt. Dadurch, dass das Führungselement an einem Ende der Rastnase angeordnet ist, welches einem Ende der Rastnase abgewandt ist, an dem die Rastnase über ein Rastarm federelastisch mit einem Verriegelungsring verbunden ist, steht ein größtmöglicher Hebelarm zur Überwindung einer Federkraft, mit der die Rastnase in die Verrieglungsposition gezwungen wird, bereit. So wird in aus dem Stand der Technik bekannten Verbindungseinrichtungen die Anlenkung an dem ersten Ende der Rastnase, an dem dieselbe mit dem Rastarm oder dem Verriegelungsring verbunden ist, bewirkt, wodurch ein größeres Drehmoment auf den Aktuatorring beziehungsweise Vernegelungsring ausgeübt werden muss, um die Federkraft, mit der die Rastnasen in die Verrieglungsposition gezwungen werden, zu überwinden.

Dadurch, dass die auf die Rastnasen wirkende und durch den Rastarm erzeugt Federkraft eine Bewegung der Rastnase in Richtung der Verrieglungsposition bewirkt, wird ferner eine selbstsichernde Verbindungseinrichtung bereitgestellt. So bewirkt diese Federkraft, dass die Rastnase ohne eine Kraftausübung auf den Verriegelungsring und/oder Aktuatorring in die Verrieglungsposition gezwungen wird und in dem Fall, in dem das Verbindungselement des zweiten Rohrteils im Bereich der Verbindungseinrichtung angeordnet wird, die Rastnasen Eingriff in das Verbindungselement zur Herstellung der Verbindung zwischen dem ersten Rohrteil und dem zweiten Rohrteil finden.

Das erste Rohrteil wird an der Verbindungseinrichtung beispielsweise über eine Schraub- oder Steck/Klemmverbindung befestigt.

Besonders bevorzugt ist, dass das Verbindungselement direkt an dem zweiten Rohrteil, beispielsweise in Form eines umlaufende Hinterschnitts, ausgebildet ist. Dadurch wird die Anzahl der für die Herstellung der Verbindung zwischen dem ersten Rohrteil und dem zweiten Rohrteil notwendigen Einzelelemente nochmals reduziert. Falls jedoch eine einstückige Ausbildung des Verbindungselementes mit dem zweiten Rohrteil nicht möglich sein sollte, ist auch die Bereitstellung des Verbindungselementes als getrenntes Element möglich. Dieses kann dann mit dem zweiten Rohrteil durch geeignete Verbindungsvorrichtungen, wie eine Schraub- oder Clipsverbindung, verbunden werden. Bei der Ausbildung der Verbindungelementes ist es besonders bevorzugt, dass dieses radialsymmetrisch ausgebildet ist. So wird eine Verbindung der beiden Rohrteile unter beliebigen Relativwinkeln zueinander ermöglicht, was den Montageprozess deutlich vereinfacht, beispielsweise im Vergleich zu einer Montage nach dem Prinzip eines Bajonettverschlusses. Ist jedoch eine vorgegebene relative Ausrichtung der Rohrteile, insbesondere nicht radialsymmetrisch ausgebildeter Rohrteile, bei der Montage gewünscht, so kann das Verbindungelement aber auch der Verriegelungsring, insbesondere hinsichtlich der Anordnung der Rastnasen und der Aufnahmen über den jeweiligen Umfang, radial asymmetrisch ausgebildet sein.

Die Ausbildung eines ersten Anschlagelementes bietet den Vorteil, dass ein Bewegung der Verbindungseinrichtung relativ zu dem zweiten Rohrteil, insbesondere dem Verbindungselement begrenzt wird, um einen problemlosen Eingriff der Rastnasen in das Verbindungselement in der Verriegelungsposition und damit eine sichere Verbindung der Rohrteile miteinander sicherzustellen.

Insbesondere in dem Fall, in dem der Verriegelungsring den Aktuatorring oder umgekehrt radial umgibt, ist es notwendig, dass der Verriegelungsring so auf den Aktuatorring oder umgekehrt aufgebracht werden kann, dass die Rastnasen durch den Aktuatorring hindurchtreten können, um mit dem Verbindungselement in Eingriff gelangen zu können und gleichzeitig die Führungselemente mit der Kulisse in Wirkverbindung bringbar sind. Unter bestimmten Randbedingungen, beispielsweise, wenn beidseitig an der Rastnase jeweils Führungselemente vorgesehen sind, ist in diesem Fall ein Aufschieben des Verriegelungsrings auf den Aktuatorring oder umgekehrt in eine axiale Richtung entlang der ersten Achse nicht möglich. Um einen komplizierten Herstellungsprozess bei gleichzeitiger Herstellung des Aktuatorrings und des Verriegelungsrings zu vermeiden, insbesondere, dass der Verriegelungsring auf dem Aktuatorring oder umgekehrt ausgebildet werden muss, ist vorgesehen, dass der Verriegelungsring bzw. der Aktuatorring mittels der vierten Verbindungsvorrichtung nach Art einer Schlossgeometrie an zumindest einer Stelle öffnenbar ausgestaltet ist. Dies ermöglicht es, den Verriegelungsring bzw. Aktuatorring zu öffnen, um den Aktuatorring bzw. Verriegelungsring zu legen und dann den Verriegelungsring bzw. Aktuatorring mittels der vierten Verbindungsvorrichtung geschlossen wird. Ferner kann der Verriegelungsring bzw. der Aktuatorring auch durch eine Vielzahl von Einzelsegmenten ausgebildet sein, um einen modularen Aufbau zu erreichen und so den Verriegelungsring bzw. Aktuatorring an die jeweiligen Randbedingungen anzupassen.

Insbesondere in dem Fall, in dem die Rastnasen in entsprechende Öffnungen, die in dem Aktuatorring ausgebildet sind, hirleinragen, insbesondere in der Verrieglungsposition durch diese hindurch ragen, wirken die Ränder der Öffnungen als zweite Anschlagelemente für die Rastnasen. Auf die Rohrteile bzw. die Verbindungseinrichtung wirkende Kräfte, insbesondere Zug- und Schubkräfte, werden durch das zweite Anschlagelement von den Rastnasen auf den Aktuatorring übertragen und so abgeleitet. So wirken auf die Rastnasen reine Scherbelastungen, insbesondere auf die Rastarme keine Knickbelastungen, so dass ein hohe Belastbarkeit erreicht wird. Das zweite Anschlagelement kann auch unabhängig von der Ausbildung einer Öffnung in dem Aktuatorring bereitgestellt werden, beispielsweise durch eine Endkante des Aktuatorrings.

Insbesondere, dass die Rastarme zumindest bereichsweise flächig auf dem Aktuatorring bzw. der darin ausgebildeten Kulisse in einer Ebene senkrecht zu der ersten Achse aufliegt, werden die Rastarme und Rastnasen sauber geführt und Schubkräfte können gut aufgenommen werden, insbesondere von den Rastarmen abgeleitet werden, woraus sich eine hohe Belastbarkeit, insbesondere für Schubkräfte, ergibt.

Dadurch, dass die Rastnasen und die Rastarme sich in eine Umfangsrichtung und nicht in eine Richtung parallel zu einer Symmetrieachse des Aktuatorrings bzw. Verriegelungsrings erstrecken, können die Rastarme, insbesondere deren Geometrie, wie Länge, und die mit diesen einhergehenden Federkräfte in einem breiten Bereich verändert werden, ohne dass die Erstreckung der Verbindungseinrichtung in Richtung der Symmetrieachse verändert werden muss. Somit kann ein sehr kompakter Aufbau der Verbindungseinrichtung erreicht werden.

Werden an den Rastnasen Abschrägungen vorgesehen, so wird ein Befestigung des zweiten Rohrteils an der Verbindungseinrichtung bzw. dem ersten Rohrteil ohne eine zusätzliche Betätigung des Vernegelungsrings beziehungsweise des Aktuatorrings ermöglicht. So bewirkt die Abschrägung, dass bei Einführen des zweiten Rohrteils, insbesondere des Verbindungselements, in die Verbindungseinrichtung eine Auslenkung der Rastnasen aus der Verriegelungsposition gegen die durch die Rastarme aufgebaute Federkraft erfolgt und bei Erreichen einer Endposition, insbesondere bei Erreichen des ersten Anschlagelements, die Rastnasen in die Verrieglungsposition "zurückschnappen" und so Eingriff in die Aufnahme des Verbindungselements finden.

Die Ausbildung von zusätzlichen Führungselementen an dem zweiten Ende der Rastnasen vereinfacht den Aufbau der Verbindungseinrichtung deutlich. So kann durch die Maßnahme auf den aus dem Stand der Technik bekannten getrennte Ausbildung des Bundes und der Nockenlauffläche an einem davon getrennten Gehäuse verzichtet werden, wodurch die Anzahl der Einzelelemente weiter reduziert wird, da die Kulisse direkt an dem Aktuatorring ausgebildet werden kann. Die Ausbildung von mehreren Führungselementen an gegenüberliegenden Seiten der Rastnase bietet ferner den Vorteil, dass die auf das einzelne Führungselement wirkende Kraft reduziert werden kann und ferner über die Führungselemente ein Kraft gleichmäßiger in die Rastnase bzw. den Rastarm eingeleitet werden kann. Eine Torsionsbewegung, die zu einer frühzeitigen Ermüdung und einem Ausfall führen könnte, wird so verhindert.

Für die Funktionsweise der Verbindungseinrichtung sind also nur zwei Einzelteile notwendig, der Aktuatorring und der Verriegelungsring. Durch Ausbildung einer Strukturierung auf der Außenseite des Aktuatorrings kann eine griffige Fläche zur Einleitung eines Drehmoments in den Aktuatorring zur Drehmanipulation direkt integriert werden.

Weiterhin kann die Verbindungseinrichtung an bereits im Stand der Technik an zweiten Rohrteilen vorhandene Verbindungselemente angepasst werden, ist also kompatibel zu diesen. Zusätzliche Gegenstücke zu der Verbindungseinrichtung, also zusätzliche Verbindungselemente, sind nicht notwendig.

Durch den besonderen Verlauf der Führungsbahn der Kulissen, auf dem das bzw. Führungselement(e) aufliegt/aufliegen, bei dem die Führungsbahn bezüglich einer Umfangsrichtung um die erste Achse geneigt ist, insbesondere die Oberfläche der Führungsbahn, auf der das Führungselement aufliegt, in unterschiedlichen radialen Abständen zu der ersten Achse verläuft, wird eine Umwandlung einer Drehbewegung des Aktuatorrings in eine Bewegung der Rastnasen bzw. Rastarme in eine radiale Richtung nach außen erreicht. Dabei kommt es zu einem geringstmöglichen Kraftverlust, so dass die auf den Aktuatorring aufzubauende Kraft nicht zusätzlich erhöht werden muss und insbesondere durch an den Rastarmen bzw. Rastnasen ausgebildeten Bolzen erfahren die Rastarme eine bestmöglich kontrollierte Bewegung über die Kulisse bzw. Führungsbahn.

Durch geeignete Wahl der Neigung der Kulisse bzw. Führungsbahn, beispielsweise 22° relativ zu einer Tangente an die Umfangsrichtung, kann einerseits erreicht werden, dass nur geringe Verdrehwinkel des Aktuatorrings von der Verriegelungsposition in die Entriegelungsposition der Rastarme, beispielsweise 7°, notwendig sind, und gleichzeitig eine selbständige Rückstellung des Aktuatorrings und der Rastarme über die durch die Rastarme aufgebaute Rückstellkraft sichergestellt wird. So können unbeabsichtigte Fehlstellungen vermieden werden und mit vergleichsweise kleinen Rotationsbewegungen vergleichsweise große Hubwege der Rastarme erreicht werden.

Dabei bietet die Ausbildung einer Parkposition in der Führungsbahn mehrere Vorteile. In der Parkposition befinden sich die Rastnasen in der Entriegelungsposition und werden, ohne dass eine Kraft auf den Aktuatorring aufgebaut oder aufrecht erhalten werden muss, gehalten. So kann die Verbindungseinrichtung ohne eine Betätigung des Aktuatorrings in einer Position relativ zu dem zweiten Rohrteil angeordnet werden, in der die Rastnasen bei einer Überführung in die Entriegelungsposition Eingriff in das Verbindungselement finden. Bei dieser Positionierung des zweiten Rohrteils relativ zu der Verbindungseinrichtung muss auch keine zusätzliche Kraft zur Bewegung der Rastnasen aus der Verrieglungsposition gegen die Federkraft aufgebaut werden. Nach Erreichen der Position, in der das zweite Rohrteil insbesondere über das ersten Anschlagelement Anlage an der Verbindungseinrichtung findet, kann dann der Aktuatorring einfach aus der Parkposition herausbewegt werden. Aufgrund der Form der Kulisse bzw. der Führungsbahn wird dann eine Bewegung des Aktuatorrings in eine Verrieglungsposition der Rastnasen durch die durch die Rastarme aufgebaute Federkraft unterstützt, so dass nur noch ein geringer Kraftaufwand zur Befestigung der Rohrteile aneinander notwendig ist.

Die Parkposition kann durch einen Abschnitt der Führungsbahn bereitgestellt werden, in dem das Führungselement in einem gleichbleibenden Abstand in radialer Richtung für verschiedene Relativdrehpositionen des Aktuatorrings und des Verriegelungsrings zueinander verbleibt. Dadurch wird die Kraft reduziert, die zum Verlassen der Parkposition notwendig ist.

Andererseits kann jedoch bereits durch eine geringe ungewollte Krafteinwirkung die Parkposition verlassen werden und die Verbindungseinrichtung ungewollt in die Verrieglungsposition überführt werden. Wird eine Parkposition dadurch ausgebildet, dass eine Vertiefung in der Führungsbahn bereitgestellt wird, so ist eine Bewegung des Aktuatorrings relativ zu dem Verriegelungsring nur gegen die durch die Rastarme aufgebaute Federkraft möglich. Erst nach Überwindung dieser Erhöhung gelangt das Führungselement wieder in einen Bereich, in dem der radiale Abstand abnimmt und so der Aktuatorring in die Verrieglungsposition gezwungen wird.

Weiterhin kann die Führungsbahn so geformt sein, dass die Neigung zur Tangente an die Umfangsrichtung nicht konstant ist, sondern eine Wölbung vorhanden ist. Diese Wölbung ist vorzugsweise nach radial außen gerichtet, so dass die Neigung mit zunehmendem radialen Abstand zur ersten Achse abnimmt. So wird erreicht, dass die mit zunehmender Auslenkung der Rastarme in Richtung der Entriegelungsposition steigende Rückstellkraft kompensiert wird und so der Aktuatorring unter gleichmäßigem Kraftaufwand gedreht werden kann. Diese Wölbung vermindert zumindest also den Kraftzuwachs bei der Bewegung von der Verriegelungs- in die Entriegelungsposition, so dass ein nahezu gleicher Kraftaufwand vom Anfang bis zum Ende der Bewegung vorliegt.

Alternativ oder ergänzend kann eine Arretierung des Aktuatorrings relativ zu dem Verriegelungsring in einer Arretierposition, die insbesondere der Entriegelungsposition der Rastnasen entspricht, erfolgen. Dazu kann eine zu der zuvor beschriebenen, in der Führungsbahn ausgebildeten Parkposition alternativ oder ergänzend ausgebildete Arretiereinrichtung vorgesehen sein. Die Arretiereinrichtung ermöglicht es, dass eine relative Drehbewegung zwischen dem Aktuatorring und dem Verriegelungsring verhindert wird, nachdem der Aktuatorring so relativ zu dem Verriegelungsring bewegt bzw. gedreht wurde, dass sich die Rastnasen in der Entriegelungsposition befinden. Die Arretiereinrichtung bietet dabei den Vorteil, dass trotz der durch die Rastarme aufgebauten Rückstellkraft keine Bewegung des Aktuatorrings relativ zu dem Verriegelungsring erfolgt, insbesondere die Rastnasen nicht selbstständig in die Verriegelungsposition übergehen. Dazu sieht die Arretiereinrichtung ein Arretierelement vor, welches durch eine kraft- und/oder formschlüssigen Wechselwirkung eine relativen Drehung des Aktuatorrings zu dem Verriegelungsring verhindert. Hierbei ist insbesondere vorteilhaft, dass die Arretierung auch nicht bei äußeren Krafteinflüssen, wie Erschütterungen oder dergleichen, gelöst wird. Somit ist die Ausbildung der Arretiereinrichtung insbesondere vorteilhaft, um die Verbindungseinrichtung während eines Transportes in der Entriegelungsposition zu halten. Vorteilhaft wird das Arretierelement mittels einer Rückstelleinrichtung, wie einer Feder, in die Arretierposition, beispielweise einen kraft- und/oder formschlüssigen Eingriff, gezwungen.

Ist nun eine Überführung der Verbindungseinrichtung aus der Arretierposition in die Verriegelungsposition gewünscht, so kann die Arretiereinrichtung durch ein Auslöseelement aus der Arretierposition herausgebracht werden. Vorteilhaft ist das Auslöseelement so gestaltet, dass es betätigt wird, wenn das zweite Rohrteil, insbesondere das Verbindungselement, mit der Verbindungseinrichtung in Wirkverbindung gebracht wird. So ist vorgesehen, dass durch das Auslöseelement die kraft- und/oder formschlüssige durch das Arretierelement aufgebaute Verbindung gelöst wird. In dem Fall, in dem die Arretierposition der Entriegelungsposition der Verbindungseinrichtung entspricht, kommt es aufgrund der durch die Federarme aufgebauten Federkraft und der Wechselwirkung der Federarme mit dem Aktuatorring über die Führungsbahn zu einer automatischen Bewegung des Aktuatorrings aus der Entriegelungs- in die Verriegelungsposition. Auf diese Weise wird auf einfachem Wege ein automatisches Verbinden der beiden Rohrteile erreicht. So kann ein Monteur beispielsweise die während des Transportes mittels der Arretiereinrichtung in die Arretierposition gehaltene Verbindungseinrichtung während eines Montageprozesses einfach mit dem zweiten Rohrteil in Wirkverbindung bringen und so automatisch die Verbindung zwischen den Rohrteilen herstellen, indem die Verbindungseinrichtung durch die bei Verbindung der beiden Rohrteile automatisch erfolgende Betätigung des Auslöseelements ohne weitere Schritte aus der Entriegelungsposition in die Verriegelungsposition überführt wird und so eine Verbindung zwischen den beiden Rohrteilen hergestellt wird.

Die besondere Ausbildung der Führungsbahn in Verbindung mit den zusätzlichen Führungselementen, insbesondere in Form der Bolzen, ermöglicht ferner die Anzeige, ob sich die Verbindungseinrichtung in der Verrieglungsposition oder außerhalb dieser befindet. So sind von außen Oberflächenbereiche sowohl des Aktuatorrings als auch des Verriegelungsrings sichtbar. Durch Anbringung geeigneter Markierungen an vorbestimmten Umfangspositionen des Aktuatorrings in Form von ersten Markierungen und des Verriegelungsrings in Form von zweiten Markierungen lässt sich die Verriegelungsposition, also eine sichere Verbindung der Rohrteile aneinander, verlässlich von außen detektieren. So können die Markierungen so angeordnet werden, dass sie nur dann fluchten, wenn sich die Rastnasen und damit die Verbindungseinrichtung in der Verrieglungsposition befinden.

Diese Indikationswirkung kann auch durch den Einsatz eines Kontrollrings verstärkt bzw. unterstützt werden. So erlaubt es dieser Kontrollring die Position der Rastnasen indirekt über die

Position der Führungselemente zu bestimmen. So sind in dem Kontrollring Ausnehmungen vorgesehen, in die die Führungselemente, insbesondere die Bolzen, Eingriff finden. Durch eine in eine radiale Richtung schräge Ausformung der Ausnehmungen bewirkt eine Bewegung der Führungselemente in die radiale Richtung eine Drehbewegung des Kontrollrings relativ zu dem Aktuatorring bzw. dem Verriegelungsring. Somit befindet sich der Kontrollring in einer vorbestimmten Drehposition, wenn sich die Rastnasen, insbesondere bezüglich einer radialen Position, in der Verriegelungsposition befinden bzw. die Führungselemente sich in einer der Verriegelungsposition der Rastnasen entsprechenden Position befinden. Durch Verwendung entsprechender dritter Markierungen ist es möglich die Position des Kontrollrings relativ zu dem Aktuatorring bzw. dem Verriegelungsring anzuzeigen, die der Verriegelungsposition der Rastnasen entspricht.

Alternativ oder ergänzend zu dem Kontrollring und/oder der Arretiereinrichtung kann auch ein Abschlussring, wie beansprucht, vorgesehen sein. Dieser Abschlussring weist ein mit dem Führungselement in Wechselwirkung bringbares Federhammerelement auf. Dieses Federhammerelement kann so angeordnet und ausgebildet sein, dass es durch das Führungselement aus einer Ruheposition in eine Auslöse- und/oder Indikatorposition überführt werden kann. Beispielsweise kann in der Auslöse- und/oder Indikatorposition das Federhammerelement aus der Oberfläche des Anschlussrings vorstehen und so ein bestimmte Position der Führungselemente und damit der Rastnasen anzeigen. Beispielsweise kann die Auslöse- und/oder Indikatorposition eingenommen werden, wenn sich das Führungselement bzw. die Rastnase außerhalb der Verriegelungsposition, beispielsweise in der Parkposition und/oder Arretierposition, befindet. So kann ein Benutzer bzw. Monteur davor gewarnt werden, dass die Verbindungseinrichtung sich nicht in der Verriegelungsposition befindet. Auch kann das Federhammerelement eine Bewegung des Führungselementes aus der Parkposition oder eine Bewegung des Auslöseelements unterstützen, indem eine die durch die Rastarme aufgebaute Federkraft unterstützende Rückstellkraft in Richtung der Verriegelungsposition aufgebaut und über die Führungselemente auf die Rastnasen übertragen wird. Auch kann durch Ausübung einer Kraft auf das Federhammerelement das Führungselement und damit die Rastnase aus der Parkposition und/oder der Arretierposition gezwungen werden. Diese Kraft kann zum Beispiel bei einem Kontakt des Federhammerelements mit dem Anschlagelement des zweiten Rohrteils erzeugt werden. Dadurch wird insbesondere das zuvor beschriebene "Zurückschnappen" der Rastnasen in die Verriegelungsposition ausgelöst, wenn sich diese in der Parkposition und/oder der Arretierposition befinden, wenn das zweite Rohrteil eingeführt wird.

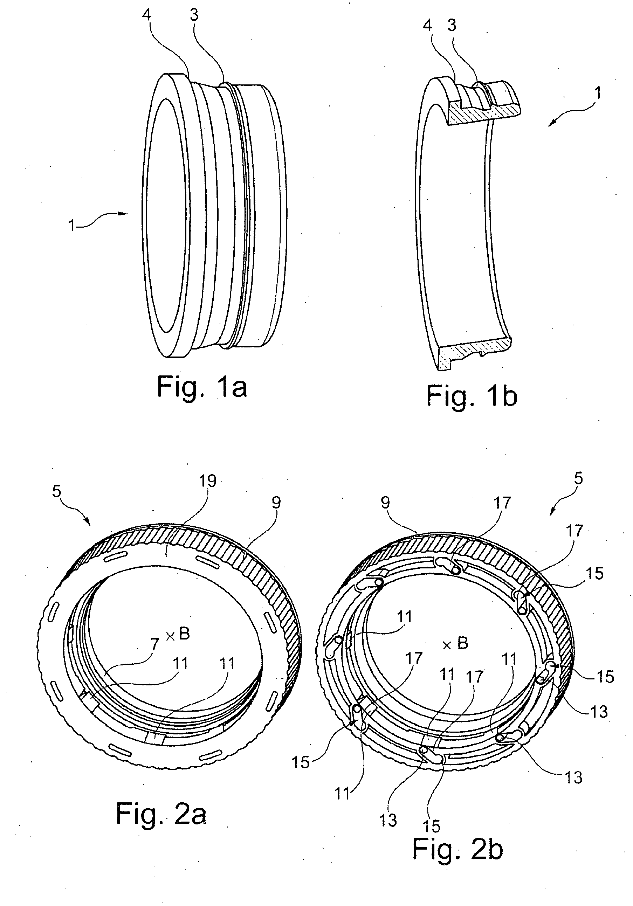

Weitere Merkmale und Vorteile der Erfindung ergeben sich aus der nachfolgenden Beschreibung, in der bevorzugte Ausführungsformen der Erfindung anhand von schematischen Zeichnungen erläutert werden. Dabei zeigt
- Figur 1a: eine perspektivische Aufsicht auf ein zu verbindendes Rohrteil;
- Figur 1b: eine Querschnittsansicht des Rohrteils der Figur 1a;
- Figur 2a: eine perspektivische Aufsicht auf eine erste Ausführungsform einer erfindungsgemäßen Verbindungseinrichtung;
- Figur 2b: eine Querschnittsansicht der Verbindungseinrichtung der Figur 2a;
- Figur 3a: eine perspektivische Aufsicht auf einen Verriegelungsring der Verbindungseinrichtung der Figuren 2a und 2b;
- Figur 3b: eine Seitenansicht des Verriegelungsrings der Figur 3a;
- Figur 3c: eine Aufsicht auf einen Aktuatorring der Verbindungseinrichtung der Figuren 2a und 2b;
- Figur 4a: eine Querschnittsansicht der Verbindungseinrichtung der Figuren 2a und 2b nach einer Verbindung mit dem zweiten Rohrteil der Figuren 1a und 1b in einer Verriegelungsposition;
- Figur 4b: eine Querschnittsansicht gemäß Figur 4a, in einem anderen Umfangsbereich;
- Figur 5: eine perspektivische Querschnittsansicht auf die Verbindungseinrichtung in der Verriegelungsposition;
- Figur 6: eine Aufsicht auf an dem Verriegelungsring und an dem Aktuatorring angeordnete Markierungen der Verbindungseinrichtung der Figuren 2a und 2b;
- Figur 7a: eine perspektivische Aufsicht auf einen Aktuatorring gemäß einer zweiten Ausführungsform einer erfindungsgemäßen Verbindungseinrichtung;
- Figur 7b: eine Detailansicht gemäß dem Ausschnitt A der Figur 7a;
- Figur 8a: eine perspektivische Aufsicht auf einen Verriegelungsring der Verbindungseinrichtung gemäß der zweiten Ausführungsform in einer offenen Position;
- Figur 8b: eine perspektivische Aufsicht auf den Verriegelungsring der Figur 8a in einer geschlossenen Position;
- Figur 9a: eine perspektivische Aufsicht auf den Aktuatorring der Figur 7a und 7b und den Verriegelungsring der Figuren 8a und 8b in einer Verriegelungsposition;
- Figur 9b: eine Aufsicht gemäß der Figur 9a in der Entriegelungsposition;
- Figur 10a: eine Aufsicht auf einen Kontrollring in einer Verriegelungsposition der Verbindungseinrichtung;
- Figur 10b: eine Aufsicht gemäß der Figur 10a in einer Entriegelungsposition;
- Figur 11a: eine Aufsicht auf einen Abschlussring der Verbindungseinrichtung gemäß der zweiten Ausführungsform in einer Verriegelungsposition;
- Figur 11b: eine Querschnittsansicht der zweiten Verbindungseinrichtung in der Verriegelungsposition;
- Figur 12a: eine Aufsicht gemäß der Figur 11a in einer Entriegelungsposition;
- Figur 12b: eine Querschnittsansicht gemäß der Figur 11b in einer Entriegelungsposition;
- Figur 13a: eine Aufsicht auf einen Verriegelungsring einer Verbindungseinrichtung gemäß einer dritten Ausführungsform, die eine Arretiereinrichtung umfasst;
- Figur 13b: eine Aufsicht auf den Verriegelungsring der Figur 13a zusammen mit einem Aktuatorring, wobei sich die Verbindungseinrichtung in einer Verriegelungsposition befindet;
- Figur 13c: eine Aufsicht auf den Verriegelungsring der Figur 13a, wobei sich die Arretiereinrichtung in einer Arretierposition befindet; und
- Figur 13d: eine Aufsicht gemäß der Figur 13b auf die Verbindungseinrichtung in der Arretierposition.
Die vorliegende Erfindung stellt eine Verbindungseinrichtung bereit, mittels der zumindest zwei Rohrteile miteinander verbunden werden können. Ein erstes, nicht dargestelltes Rohrteil, wird direkt mit der Verbindungseinrichtung verbunden, wobei die Verbindungseinrichtung eine lösbare Verbindung mit einem zweiten Rohrteil 1, wie es beispielsweise in den Figuren 1a und 1b dargestellt ist, ermöglicht wird. Das zweite Rohrteil 1 umfasst ein Verbindungselement in Form eines Hinterschnitts 3. Gemäß dem in den Figuren 1a und 1b dargestellten zweiten Rohrteil 1 ist das Verbindungselement einstückig in Form des Hinterschnitts 3 mit dem Rohrteil 1 ausgebildet. Darüber hinaus umfasst das Verbindungselement ein erstes Anschlagelement in Form einer Stufe 4. Auch dieses Anschlagelement ist einstückig mit dem zweiten Rohrteil 1 ausgebildet. In anderen, nicht dargestellten Ausführungsformen, kann das Verbindungselement auch als getrenntes Bauteil ausgebildet sein, welches mit dem zweiten Rohrteil verbunden wird.

In Figur 2a ist eine perspektivische Aufsicht auf eine Verbindungseinrichtung 5 gemäß einer ersten Ausführungsform der Erfindung dargestellt. In Figur 2b ist eine Querschnittsansicht der Verbindungseinrichtung 5 dargestellt. Die Verbindungseinrichtung 5 umfasst einen Verriegelungsring 7 sowie einen Aktuatorring 9. Wie Figur 2b zu entnehmen ist, weist der Verriegelungsring 7 eine Vielzahl von Rastnasen 11 auf. Die Rastnasen 11 stehen von dem Verriegelungsring 7 bezüglich einer Symmetrieachse B nach radial innen von dem Verriegelungsring 7 vor. An den Rastnasen 11 sind Führungselemente in Form von Bolzen 13, die sich im wesentlichen in eine Richtung parallel zu der Achse B erstrecken, ausgebildet. Die Bolzen 13 greifen in eine in dem Aktuatorring 9 ausgebildete Kulisse 15 ein. Die Kulissen 15 weisen Führungsbahnen 17 auf. Der Aktuatorring 9 ist an seiner dem Verriegelungsring 7 abgewandten Seite, wie in Figur 2a dargestellt, durch eine Blende 19 abgedeckt. Diese Blende 19 ist in Figur 2b nicht dargestellt.

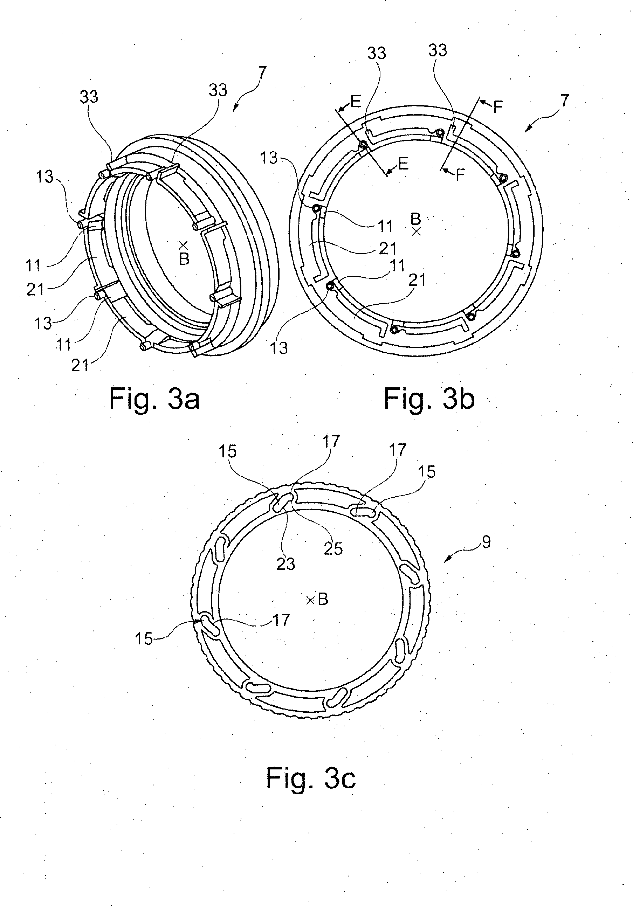

In den Figuren 3a und 3b ist der Verriegelungsring 7 der Verbindungseinrichtung 5 detaillierter dargestellt, während in Figur 3c der Aktuatorring 9 detaillierter dargestellt ist.

Wie den Figuren 3a und 3b zu entnehmen ist, sind die Rastnasen 11, an denen die Führungselemente in Form der Bolzen 13 ausgebildet sind, über Rastarme 21 federelastisch an dem Vernegelungsring 7 angeordnet. Sowohl die Rastarme 21, als auch die Rastnasen 11 erstrecken sich entlang einer Umfangsrichtung des Verriegelungsrings 7, das heißt tangential zu einer Umfangsrichtung um die Symmetrieachse B herum. Dies ermöglich es, dass die Länge der Rastarme 21 und damit die durch die Rastarme 21 hervorgerufene Federkraft verändert werden kann, ohne eine Erstreckung des Verriegelungsrings 7 in eine Richtung parallel zur Symmetrieachse B verlängern zu müssen.

In Figur 3c sind die Kulissen 15 innerhalb des Aktuatorrings 9, in die die Bolzen 13 Eingriff finden, dargestellt. Wie Figur 3c zu entnehmen ist, verlaufen die in den Kulissen 15 ausgebildeten Führungsbahnen 17 geneigt in Bezug auf die Umfangsrichtung des Aktuatorrings 9. Unterschiedliche Bereiche 23, 25 der Kulisse 15 beziehungsweise der Führungsbahn 17 sind in unterschiedlichen radialen Abständen zu der Symmetrieachse B angeordnet. Durch den Bereich 25 wird eine sogenannte Parkposition festgelegt.

Wie sich insbesondere aus der Figur 2b ergibt, bewirkt eine Drehung des Aktuatorrings 9 relativ zu dem Verriegelungsring 7, dass die Rastnasen 11 aufgrund der Führung der Führungselemente 13 in der Kulisse 15 beziehungsweise Führungsbahn 17 nach radial Außen ausgelenkt werden und zwar gegen ein durch die Rastarme 21 aufgebaute Federkraft. Wie Figur 3c zu entnehmen ist, verläuft die Führungsbahn 17 im Bereich 25 in einem gleichbleibenden radialen Abstand bezüglich der Symmetrieachse B. Dies bewirkt, dass durch eine Drehung des Aktuatorrings 9 die Führungselemente in Form der Bolzen 13 in diesen Bereich 25 überführt werden können. Da in diesem Bereich 25 jedoch keine Schräge vorhanden ist, wird eine stabile Position zwischen dem Verriegelungsring 7 und dem Aktuatorring 9 eingenommen. Die über die Rastarme 21 aufgebaute Federkraft stellt dann sicher, dass die Bolzen 13 auf der Führungsbahn 17 aufliegen, jedoch wird in den Aktuatorring 9 kein Drehmoment induziert. Dies ermöglicht es, dass die Verbindungseinrichtung 5 stabil in der Parkposition, die einer Entriegelungsposition entspricht, gehalten werden kann.

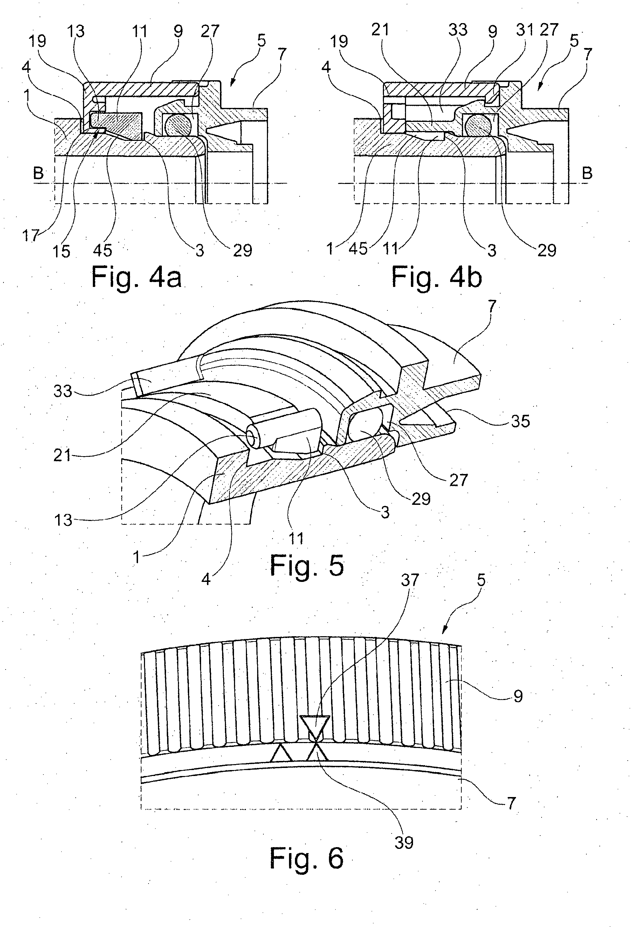

In Figur 4a ist eine Querschnittsansicht eines ersten Umfangsbereichs gemäß Richtung E in Figur 3b der Verbindungseinrichtung 5 in einer Verriegelungsposition dargestellt. Wie Figur 4a zu entnehmen ist, ist das Rohrteil 1 in die Verbindungseinrichtung 5 eingeschoben worden. Die Stufe 4 bildet einen Anschlag für den Aktuatorring 9. Die Rastnase 11 befindet in dieser Verriegelungsposition der Verbindungseinrichtung 5 in Eingriff in dem Hinterschnitt 3. Dadurch wird das zweite Rohrteil 1 gegen eine Bewegung in Richtung der ersten Achse B gesichert.

Wie Figur 4a ferner zu entnehmen ist, ist innerhalb des Verriegelungsrings 7 eine Vertiefung 27, in der ein Dichtelement in Form eines O-Ring 29 angeordnet ist, ausgebildet.

Wie Figur 4b, die eine Querschnittsansicht eines weiteren Umfangsbereichs in Richtung F in Figur 3b zeigt, zu entnehmen ist, ist der Aktuatorring 9 mittels einer Clipsverbindung 31 in eine axiale Richtung der ersten Achse B gesichert. Jedoch wird gleichzeitig eine Drehung des Aktuatorrings 9 relativ zu dem Verriegelungsring 7 ermöglicht. Durch Ausbildung entsprechender Stege 33 auf dem Verriegelungsring 7 wird sichergestellt, dass Scherkräfte auf die Rastnasen 11 beziehungsweise Rastarme 21 vermieden werden. So kommt die Rastnase 11 beziehungsweise der Rastarm 21 im Bereich der Stege 33 in Kontakt mit einem zweiten Anschlagelement 34 des Aktuatorrings 9.

In Figur 5 ist eine perspektivische Aufsicht auf die Verbindungseinrichtung 5 in der Verriegelungsposition dargestellt, allerdings unter Auslassung des Aktuatorrings 9. Wie der Figur 5 zu entnehmen ist, ist in dem Vernegelungsring 7 ferner eine Aufnahme 35 einer Verbindungsvorrichtung, die eine Verbindung der Verbindungseinrichtung 5 mit einem nicht dargestellten ersten Rohrteil ermöglicht, ausgebildet.

In Figur 6 ist eine Aufsicht auf den Verriegelungsring 7 und den Aktuatorring 9 der Verbindungseinrichtung 5 dargestellt. Auf dem Aktuatorring 9, insbesondere auf dessen Umfang ist eine erste Markierung in Form einer Erhebung 37 ausgebildet, während auf dem Umfang des Verriegelungsrings 7 eine zweite Markierung in Form einer Erhebung 39 ausgebildet ist. Diese Markierungen 37, 39 ermöglichen es einem Benutzer, die Verriegelungsposition der Verbindungseinrichtung 5 dadurch zu erkennen, dass die Markierungen 37, 39 relativ zueinander fluchten. Dies ist insbesondere dann der Fall, wenn sich der Verriegelungsring 7 und der Aktuatorring 9 in der in Figur 2a dargestellten Relativposition befinden, also die Rastnasen 11 sich in ihrer radial inneren Position befinden.

Bei der zuvor beschriebenen Verbindungseinrichtung 5 gemäß einer ersten Ausführungsform ist der Aktuatorring 9 bereichsweise um den Verriegelungsring 7 umlaufend angeordnet bzw. auf diesen aufgeschoben.

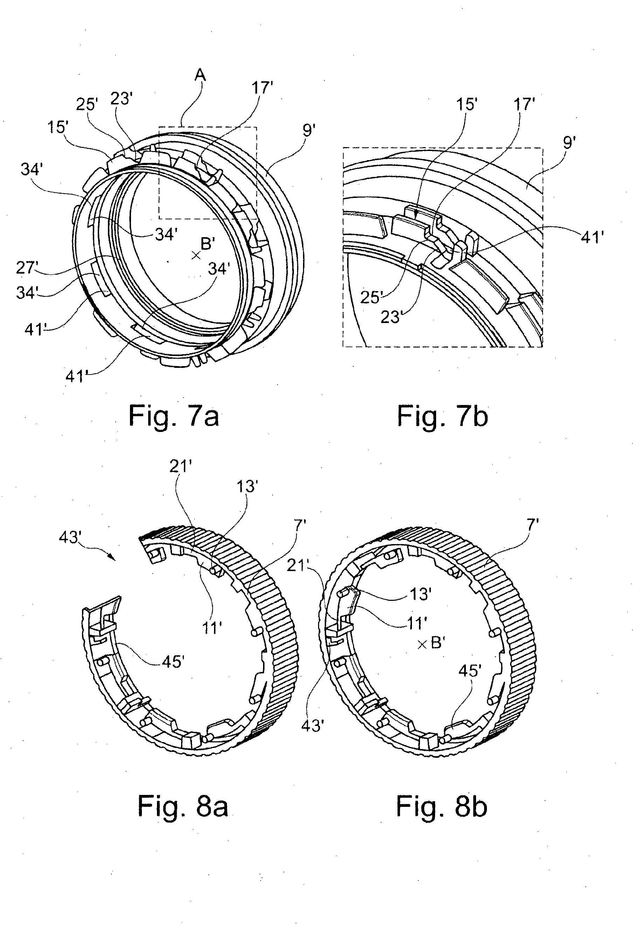

Nachfolgend wird nun anhand der Figuren 7a bis 12b eine zweite Ausführungsform einer erfmdungsgemäßen Verbindungseinrichtung 5' erläutert. Diejenigen Elemente der Verbindungseinrichtung 5', die denjenigen der Verbindungseinrichtung 5 entsprechen, tragen die gleichen Bezugszeichen, allerdings einfach gestrichelt.

Im Gegensatz zu der Verbindungseinrichtung 5 wird bei der Verbindungseinrichtung 5' der Verriegelungsring 7' umlaufend um den Aktuatorring 9' angeordnet.

Hieraus ergibt sich insbesondere ein innerer Aufbau des Aktuatorrings 9', wie er in der Figuren 7a und 7b dargestellt ist. Die entsprechenden Kulissen 15' sind auf einer äußeren Umfangsfläche des Aktuatorrings 9' angeordnet.

Die Kulissen 15' weisen jedoch weiterhin Führungsbahnen 17' auf, in denen die jeweiligen Bereiche 23' und 25' ausgebildet sind, wobei insbesondere durch den Bereich 25' eine Parkposition ausgebildet ist. Um jedoch ein Eingreifen der Rastnasen 11' des Vernegelungsrings 7', wie er insbesondere in den Figuren 8a und 8b dargestellt ist, zu ermöglichen, weist der Aktuatorring 9' Öffnungen 41' auf, durch die die Rastnasen 11' hindurch reichen können.

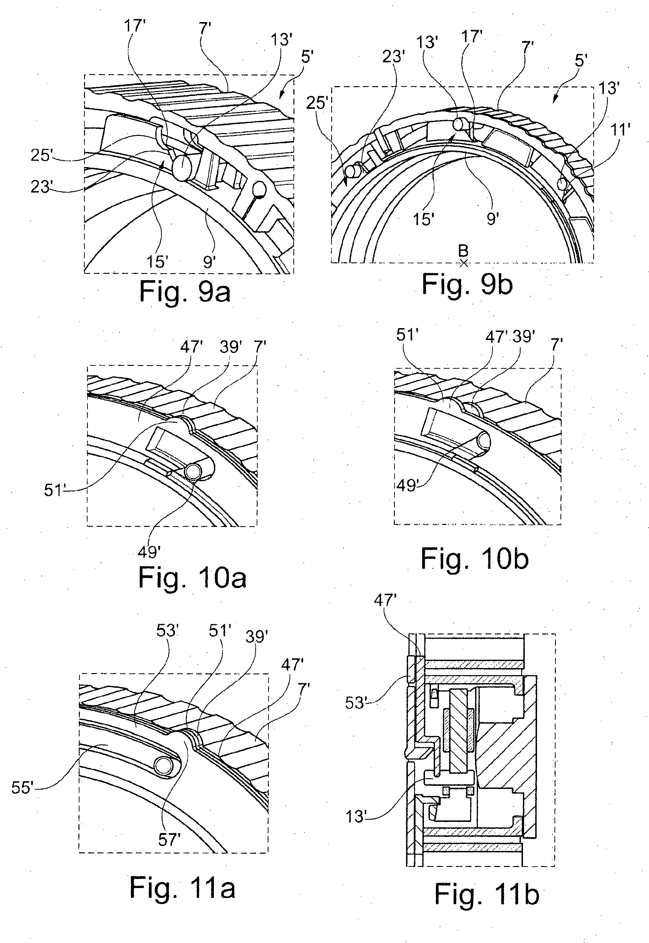

Wie Figur 8a zu entnehmen ist, ist der Verriegelungsring 7' derartig ausgestaltet, dass er an seinem Umfang in einem Bereich 43' geöffnet werden kann. Der Verrieglungsring 7' wird in der in Figur 8a dargestellten geöffneten Konstellation auf den Aktuatorring 9' aufgesetzt und dann in die in Figur 8b dargestellte Konstellation überführt, also im Bereich 43' mittels einer Verbindungsvorrichtung geschlossen. Anschließend befindet sich die Verbindungseinrichtung 5' insbesondere in der in der Figur 9a dargestellten Konstellation. Es entsteht also erst nach Montage und Schließen des Bereichs 43' ein geschlossener Ring.

Die Bolzen 13' werden in der Kulisse 15' derartig geführt, dass sie auf der Führungsbahn 17' aufliegen, und zwar unter einer durch die Rastarme 21' aufgebauten Federvorspannung. Wird nun der Verriegelungsring 7' relativ zu dem Aktuatorring 9' gedreht, so wird der Bolzen 13' im schräg verlaufenden Bereich 23' der Führungsbahn 17' geführt und so nach radial außen bewegt. Dies bewirkt gleichzeitig eine Bewegung der Rastnasen 11' in die Öffnungen 41' hinein, wie insbesondere in Fig. 9b dargestellt. Die Innenwandungen der Öffnungen 41' bilden entsprechende zweite Anschlagelemente 34' für die Rastnasen 11' beziehungsweise Rastarme 21'. In der in Fig. 9b dargestellten Position befinden sich die Bolzen 13' im Bereich 25' der Führungsbahn 17' und damit in der sogenannten Parkposition. In dieser Parkposition befindet sich die Verbindungseinreichung 5' bzw. die Rastnasen 11' in der Entriegelungsposition. In dieser Position kann das zweite Rohrteil in die Verbindungseinrichtung 5' eingeführt werden. Durch eine entsprechende Relativdrehung des Verriegelungsrings 7' relativ zu dem Aktuatorring 9' können dann die Bolzen 13' und damit die Rastnasen 11' wieder in die in Fig. 9a dargestellte Position überführt werden, um so eine Verriegelung der Verbindungseinrichtung 5, 5' herzustellen.

Zu beachten ist jedoch, dass bei der Verbindungseinreichung 5, 5' eine Verbindung auch dadurch hergestellt werden kann, dass das zweite Rohrteil in die Verbindungseinrichtung 5, 5' eingeführt wird, wenn sich dieselbe in einer Verriegelungsposition befindet. Durch entsprechende Abschrägungen 45, 45' werden die Rastnasen 11, 11' aus der Verriegelungsposition, durch die axiale Bewegung des zweiten Rohrteils ausgelenkt und dann nach Erreichen einer Endposition wieder in den Hinterschnitt 3 zurückzuschnappen, um so das zweite Rohrteil 1 zu verbinden.

Bei der Verbindungseinreichung 5' wird ferner vorgeschlagen, dass durch ein insbesondere in den Fig. 10a und 10b dargestellten Kontrollring 47' die Erkennung einer Verriegelung bzw. einer Verriegelungsposition der Verbindungseinrichtung 5' von außen ermöglicht wird.

Der Kontrollring 47' weist eine Ausnehmung 49' auf, in die der Bolzen 13' hineinreicht. Die Ausnehmung 49' verläuft geneigt relativ zu einer radialen Richtung der Achse B'. Dies bewirkt, dass , wenn der Bolzen 13' aus der in der Fig. 10a dargestellten Verriegelungsposition in die in der Fig. 10b dargestellte Entriegelungs-/Parkposition überführt wird, der Kontrollring 47' relativ zu dem Verriegelungsring 7' gedreht wird. An dem Kontrollring 47' ist eine Markierung in Form einer Erhebung 51' ausgebildet. Wie den Fig. 10a und 10b zu entnehmen ist, weist der Verriegelungsring 7' ebenfalls eine Markierung in Form der Erhebung 39' auf. Fluchten die Markierungen 39' und 51', wie in Fig. 10a dargestellt, kann der Benutzer von außen erkennen, dass sich die Verbindungseinrichtung 5' in der Verriegelungsposition befindet.

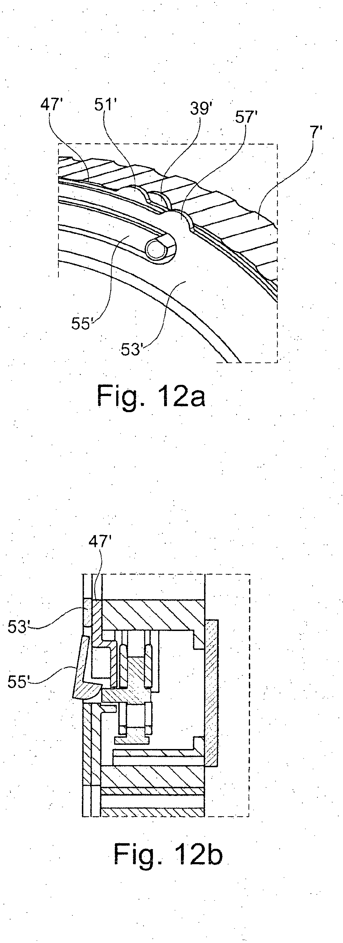

Schließlich wird für die Verbindungseinrichtung 5' noch der Einsatz eines Abschlussrings 53', wie er insbesondere in den Fig. 11a bis 12b dargestellt ist, vorgeschlagen. Der Abschlussring 53' kann alternativ oder ergänzend zu dem Kontrollring 47' koaxial zu dem Aktuatorring 9' bzw. Vernegelungsring 7' angeordnet werden. In Fig. 11a ist eine Aufsicht auf den Abschlussring 53', den Kontrollring 47' und den Verriegelungsring 7' dargestellt, und zwar in einer Verriegelungsposition der Verbindungseinrichtung 5', während in Fig. 11b eine Querschnittsansicht durch die Verbindungseinrichtung 5' dargestellt ist. Die Fig. 12a entspricht im wesentlichen der Fig. 11a, jedoch befindet sich die Verbindungseinrichtung 5' in der Entriegelungs- bzw. Parkposition. Die Fig. 12b entspricht im wesentlichen der Fig. 11b, allerdings befindet sich die Verbindungseinrichtung 5' ebenfalls in der Entriegelungsposition.

Fig. 11a ist insbesondere zu entnehmen, dass der Abschlussring 53' ein Federhammerelement 55' aufweist. Darüber hinaus ist an dem Abschlussring 53' eine weitere Markierung in Form einer Erhebung 57' angeordnet. Befindet sich die Verbindungseinrichtung 5' in der Verriegelungsposition, so fluchtet die auf dem Verriegelungsring 7' ausgebildete Markierung 39', die auf dem Kontrollring 47' ausgebildete Markierung 51' und die auf dem Abschlussring 53' ausgebildete Markierung 57'.

In der Verriegelungsposition ist darüber hinaus das Federhammerelement 55' eingerückt, d. h. die Oberfläche des Federhammerelements 55' schließt bündig mit der restlichen Oberfläche des Abschlussrings 53' ab. Befindet sich die Verbindungseinrichtung 5' jedoch in der Entriegelungsposition oder in einer Parkposition, wie es in den Fig. 12a und 12b dargestellt ist, so ist das Federhammerelement 55' aus der in den Fig. 11a und 11b dargestellten Ruheposition in eine in den Fig. 12a und 12b dargestellte Auslöse- und/oder Indikatorposition ausgerückt. Dies bedeutet, dass das Federhammerelement 55' aus der Oberfläche des Abschlussrings 53' heraussteht. Hierdurch erfolgt eine weitere Anzeige für den Benutzer, dass sich die Verbindungseinreichung 5' nicht in der Verriegelungsposition befindet. Diese Anzeige erfolgt zusätzlich dazu, da wie in Fig. 12a dargestellt, die Markierungen 39', 51' und 57' nicht miteinander fluchten.

Wie darüber hinaus der Fig. 12b zu entnehmen ist, wird durch das Federhammerelement 55' eine zusätzliche Kraft auf den Bolzen 13' ausgeübt. Diese Kraft verstärkt sich insbesondere, wenn der Abschlussring 53' gegen den Anschlag 4 des zweiten Rohrteils 1 geführt wird. Kommt es zu einer Berührung des Federhammerelements 55' mit dem Anschlag 4, so wird der Bolzen 13' aus der Parkposition herausgezwungen und geht aus dem Bereich 25' in den Bereich 23' der Kulisse 15' bzw. Führungsbahn 17' über. Dies bewirkt jedoch, dass die Rastnase 11' über die über den Rastarm 21' aufgebaute Federkraft in die Verriegelungsposition gezwungen wird unter gleichzeitiger Relativdrehung zwischen dem Vernegelungsring 7' und dem Aktuatorring 9'. Somit kommt es zu einer automatischen Überführung der Verbindungseinrichtung 5' in die Verriegelungsposition und damit zu einer automatischen Verbindung des ersten Rohrteils mit dem zweiten Rohrteil. Es erfolgt also ein "Zurückschnappen", das durch das Federhammerelement 55' ausgelöst wird, wenn sich das Führungselement in der an sich stabilen Parkposition befunden hat.

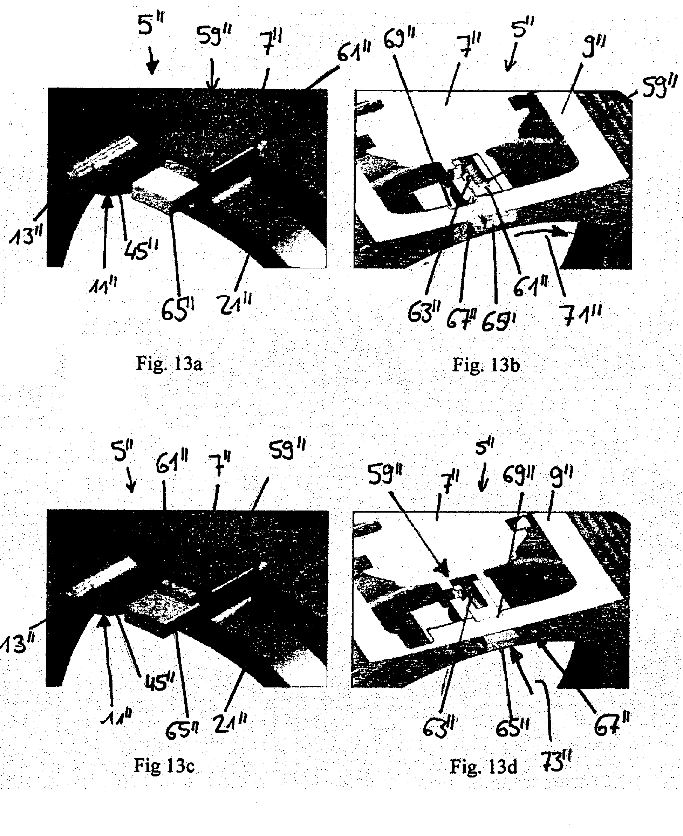

In den Figuren 13a bis 13d ist eine dritte Ausführungsform einer erfindungsgemäßen Verbindungseinrichtung 5" dargestellt. Diejenigen Elemente der Verbindungseinrichtung 5", die denjenigen der Verbindungseinrichtung 5' entsprechen, tragen die gleichen Bezugszeichen, allerdings zweifach gestrichen.

Wie insbesondere der 13a zu entnehmen ist, weist der Vernegelungsring 7" eine abgewandelte Konfiguration auf. So umfasst der Verriegelungsring 7" eine Arretiereinrichtung 59".

In den Figuren 13a und 13b ist die Verbindungseinrichtung 5" in einer Position dargestellt, in der sich die Rastnasen 11" in einer Verriegelungsposition befinden. Wie insbesondere Figur 13b zu entnehmen ist, umfasst die Arretiereinrichtung 59" ein mit dem Verriegelungsring 7" drehmitnahmesicher verbundenes Arretierelement in Form eines Arretierbolzens 61 ", welcher mittels einer Rückstelleinrichtung in Form einer Feder 63" vorgespannt ist.

Einstückig mit dem Arretierbolzen 61" ist ein Auslöseelement in Form einer Auslöselasche 65" ausgebildet. Wie insbesondere der Figur 13b zu entnehmen ist, ragt die Auslöselasche 65" durch eine in dem Aktuatorring 9" ausgebildete Öffnung in Form eines Schlitzes 67" hindurch. Im Vergleich zu den Aktuatorringen der voran beschriebenen Verbindungseinrichtungen, weist der Aktuatorring 9" darüber hinaus eine Ausnehmung 69" auf.

Wie bereits zuvor erwähnt, ist in den Figuren 13a und 13b die Verbindungseinrichtung 5" in einer Verriegelungsposition dargestellt. Wird der Aktuatorring 9" entlang des Pfeils 71" in Figur 13b relativ zu dem Verriegelungsring 7" und dem teilweise in diesem gelagerten Arretierbolzen 61" bewegt, kann die Verbindungseinrichtung 5 " in eine in den Figuren 13c und 13d dargestellte Arretierposition überführt werden. So führt die Drehung entlang des Pfeils 71" dazu, dass der drehmitnahmesicher mit dem Verriegelungsring 7" verbundene Arretierbolzen 61" entlang der Oberfläche des Aktuatorrings 9" geführt wird, bis er in den Bereich des Ausnehmung 69" gelangt.

Aufgrund der Vorspannung des Arretierbolzens 61" durch die Feder 63" "schnappt" der Arretierbolzen 61" in die Ausnehmung 69" ein. Dadurch wird eine drehmitnahmesichere Arretierung des Verriegelungsrings 7" relativ zu dem Aktuatorring 9" in einer Arretierposition erreicht. Diese Arretierposition entspricht insbesondere einer Entriegelungsposition der Verbindungseinrichtung 5".

Über eine in den Figuren 13a bis 13d nicht dargestellte Kulisse, die mit dem Bolzen 13" der Rastnasen 11" wechselwirken, sind die Rastnasen 11" des Verriegelungsrings 7" in die in Figur 13c dargestellte Entriegelungsposition überführt worden, und zwar entgegen einer durch die Rastarme 21" aufgebaute Federkraft. Die Verbindungseinrichtung 5" befindet sich somit in einer stabilen Position, die insbesondere für einen Transport der Verbindungseinrichtung 5" geeignet ist, da auch äußere Erschütterungen die Arretierung zwischen dem Verriegelungsring 7" und dem Aktuatorring 9" nicht ohne weiteres lösen können.

Kommt es jedoch zu einer Verbindung der Verbindungseinrichtung 5" mit einem in den Figuren 13a bis 13d nicht dargestellten zweiten Rohrteil, so wird die Arretierung in der Arretierposition im Wesentlichen automatisch gelöst. Dazu weist die Arretiereinrichtung 59" das zuvor beschriebene Auslöseelement in Form der Auslöselasche 65" auf. Bei einer Verbindung der Verbindungseinrichtung 5" mit dem zweiten Rohrteil kommt es zu einem Kontakt des zweiten Rohrteils, insbesondere eines Anschlagelements, wie der Stufe 4 des zweiten Rohrteils, mit der Auslöselasche 65". Dabei wird eine Kraft, insbesondere entlang des Pfeils 73" in Figur 13d auf die Auslöselasche 65" ausgeübt. Diese Kraft bewirkt eine Bewegung nicht nur der Auslöselasche 65", sondern auch des einstückig mit dieser ausgebildeten Arretierbolzens 61" gegen die Kraft der Feder 63". Da der Arretierbolzen 61" die Ausnehmung 69" verlässt, bewirkt die durch die Federarme 21" aufgebaute Federkraft, dass die Verbindungseinrichtung 5" selbstständig in die in den Figuren 13a und 13b dargestellte Position "zurückschnappt", also die Verbindungseinrichung 5" in die Verriegelungsposition überführt wird.

Der Einsatz der Arretiereinrichtung 59" kann alternativ oder ergänzend zu der Realisierung der Parkposition und/oder des Einsatzes des Abschlussrings erfolgen. Bei Verzicht auf den Abschlussring ergibt sich insbesondere bei Einsatz der Arretiereinrichtung eine Verbindungseinrichtung, die lediglich zwei Einzelbauteile umfasst, nämlich den Aktuatorring 9" und den Verrieglungsring 7".

In der in den Figuren 13a bis 13d dargestellten Ausführungsform stellt der Verriegelungsring 7" ein erstes Element und der Aktuatorring 9" ein zweites Element dar. In anderen, nicht dargestellten Ausführungsformen kann auch vorgesehen sein, dass diese Zuordnung getauscht -also kinematisch umgekehrt- ist, also der Aktuatorring 9" ein erstes Element darstellt, an dem drehmitnahmesicher die Arretiereinrichtung bzw. ein von der Arretiereinrichtung umfasstes Arretierelement ausgebildet ist, während der Verriegelungsring 7" ein zweites Element darstellt, das über das Arretierelement kraft- und formschlüssig mit dem Aktuatorring 9" arretiert werden kann.

Die in der vorstehenden Beschreibung, in den Figuren und in den Ansprüchen beschriebenen Merkmale können sowohl einzeln als auch in beliebiger Kombination wesentlich für die Erfindung in ihren verschiedenen Ausführungsformen sein.

### Bezugszeichen

- 1: Rohrteil
- 3: Hinterschnitt
- 4: Stufe
- 5, 5', 5": Verbindungseinrichtung
- 7, 7', 7": Verriegelungsring
- 9, 9', 9": Aktuatorring
- 11, 11', 11": Rastnase
- 13, 13', 13": Bolzen
- 15, 15': Kulisse
- 17, 17': Führungsbahn
- 19: Blende
- 21, 21', 21": Rastarm
- 23, 23': Bereich
- 25, 25': Bereich
- 27, 27': Vertiefung
- 29: O-Ring
- 31: Clipsverbindung
- 33: Steg
- 34, 34': Anschlagelement
- 35,: Aufnahme
- 37: Erhebung
- 39, 39': Erhebung
- 41': Öffnung
- 43': Bereich
- 45, 45', 45": Abschrägungen
- 47': Kontrollring
- 49': Ausnehmung
- 51': Erhebung
- 53': Abschlussring
- 55': Federhammerelement
- 57': Erhebung
- 59": Arretiereinrichtung
- 61": Arretierbolzen
- 63": Feder
- 65": Auslöselasche
- 67": Schlitz
- 69": Ausnehmung
- 71": Pfeil
- 73": Pfeil

- A: Ausschnitt
- B, B': Symmetrieachse
- E: Richtung
- F: Richtung

## Patentansprüche

1. Verbindungseinrichtung (5, 5') zur Verbindung zumindest zweier Rohrteile, wobei die Verbindungseinrichtung (5, 5') zumindest bereichsweise mit einem ersten Rohrteil verbunden ist und mittels der Verbindungseinrichtung (5, 5') eine lösbare Verbindung mit zumindest einem mit einem zweiten Rohrteil (1) in Wirkverbindung stehenden Verbindungselement (3, 4) herstellbar ist, die Verbindungseinrichtung (5, 5') zumindest einen Verriegelungsring (7, 7') mit zumindest zwei elastisch bewegbaren und in radial innere Richtung des Verriegelungsrings (7, 7') vorstehenden Rastnasen (11, 11') und zumindest einen Aktuatorring (9, 9') zur Bewegung der Rastnasen (11, 11') aus zumindest einer Verriegelungsposition, in der zumindest eine der Rastnasen (11, 11') Eingriff in das Verbindungselement (3) findet, in zumindest eine Entriegelungsposition, in der der Eingriff gelöst ist, und umgekehrt aufweist, wobei die jeweilige Rastnase (11, 11') an einem ersten Ende über zumindest einen Rastarm (21, 21') federnd an dem Verrieglungsring (7, 7') gelagert ist und ein dem ersten Ende gegenüberliegendes zweites Ende der Rastnase (11, 11') frei beweglich ist, **dadurch gekennzeichnet, dass**
im Bereich des zweiten Endes der jeweiligen Rastnase (11, 11') zumindest ein Führungselement (13, 13') angeordnet ist und das jeweilige Führungselement (13, 13') in zumindest einer von dem Aktuatorring (9, 9') umfassten Kulisse (15, 15') geführt ist und zwar derart, dass die Rastnase (11, 11') durch eine durch den Rastarm (21, 21') aufgebaute Federkraft in die Verrieglungsposition zwingbar ist und mittels einer Bewegung des Aktuatorrings (9, 9') relativ zu dem Verriegelungsring (7, 7') und/oder des Verriegelungsrings (7, 7') relativ zu dem Aktuatorring (9, 9') aus der Verriegelungsposition entgegen der Federkraft in die Entriegelungsposition zwingbar ist.

2. Verbindungseinrichtung nach Anspruch 1, **dadurch gekennzeichnet, dass** das erste Rohrteil mit dem Aktuatorring oder dem Verrieglungsring mittels zumindest einer ersten Verbindungsvorrichtung verbindbar ist, **dadurch gekennzeichnet, dass** das Verbindungselement (3) mit dem zweiten Rohrteil (1), insbesondere mittels zumindest einer zweiten Verbindungsvorrichtung, verbunden ist, zumindest bereichsweise, vorzugsweise vollständig, in dem zweiten Rohrteil (1) ausgebildet ist und/oder zumindest eine Aufnahme für die Rastnase (11, 11'), insbesondere umfassend zumindest eine Vertiefung, zumindest eine Nut und/oder zumindest einen Hinterschnitt (3), aufweist, wobei die Aufnahme (3) vorzugsweise um das zweite Rohrteil (1) vollständig umlaufend ausgebildet ist, und/oder **dadurch gekennzeichnet, dass**
das Verbindungselement zumindest ein erstes Anschlagelement (4) für die Verbindungseinrichtung (5, 5'), insbesondere den Verriegelungsring (7, 7') und/oder den Aktuatorring (9, 9'), vorzugsweise zur Begrenzung einer Bewegung der Verbindungseinrichtung (5, 5') in eine axiale Richtung entlang einer ersten Achse (B, B') umfasst, wobei die erste Achse vorzugsweise einer Längsachse des ersten Rohrteils und/oder des zweiten Rohrteils und/oder oder einer Symmetrieachse (B, B') des Aktuatorrings (9, 9') relativ und/oder des Verriegelungsrings (7, 7') entspricht.

3. Verbindungseinrichtung nach einem der vorangehenden Ansprüche, **dadurch gekennzeichnet, dass**
der Verriegelungsring (7') zumindest bereichsweise radial außen auf den Aktuatorring (9') aufsteckbar, aufschiebbar und/oder zumindest bereichsweise den Aktuatorring (9')radial umgebend auf dem Aktuatorring (9') anordbar ist oder der Aktuatorring (9) zumindest bereichsweise radial außen auf den Vernegelungsring (7) aufsteckbar, aufschiebbar und/oder zumindest bereichsweise den Verriegelungsring (7) radial umgebend auf dem Verriegelungsring (7) anordbar ist, wobei der Aktuatorring (9) und der Verriegelungsring (7) vorzugsweise mittels zumindest einer dritten Verbindungsvorrichtung (31) miteinander verbindbar sind, vorzugsweise derart, dass eine Bewegung in eine axiale Richtung der ersten Achse (B, B') verhindert ist und eine Drehbewegung des Aktuatorrings (9, 9') relativ zu dem Verriegelungsring (7, 7') um die erste Achse (B, B') ermöglich ist, und/oder **dadurch gekennzeichnet, dass**
der Verriegelungsring (7') oder der Aktuatorring an zumindest einer Umfangsstelle (43') mittels zumindest einer vierten Verbindungsvorrichtung öffnenbar und/oder schließbar ist, wobei vorzugsweise eine Vielzahl von Einzelsegmenten des Verrieglungsrings oder des Aktuatorrings vorgesehen ist, die insbesondere über eine Vielzahl von vierten Verbindungsvorrichtungen miteinander verbindbar sind.

4. Verbindungseinrichtung nach einem der vorangehenden Ansprüche, **dadurch gekennzeichnet, dass**
die Rastnase (11, 11') und/oder der Rastarm (21, 21') zumindest in der Verriegelungsposition in eine Richtung entlang der ersten Achse (B, B') durch zumindest ein zweites von dem Aktuatorring (9, 9') umfasstes Anschlagelement (34) abgestützt ist und/oder mit dem zweiten Anschlagelement (34) bei Aufbau einer Kraft auf die Verbindungseinrichtung (5, 5') in Richtung der ersten Achse (B, B') in Kontakt gelangt, insbesondere die Rastnase (11'), zumindest in der Verriegelungsposition, zumindest bereichsweise in zumindest eine in dem Aktuatorring (9') ausgebildete Öffnung (41') hineinragt und/oder durch die Öffnung (41') hindurch ragt, und/oder **dadurch gekennzeichnet, dass**
der Rastarm (11, 11') und/oder die Rastnase (21, 21') sich im wesentlichen in eine Richtung senkrecht zu der ersten Achse (B, B') und/oder tangential zu einer Umfangsrichtung des Verrieglungsrings (7, 7') und/oder Aktuatorrings (9, 9') erstreckt beziehungsweise erstrecken.

5. Verbindungseinrichtung nach einem der vorangehenden Ansprüche, **dadurch gekennzeichnet, dass**
die Rastnase (11, 11') zumindest eine Abschrägung (45, 45') in eine Richtung entlang der ersten Achse (B, B') aufweist, insbesondere um eine Auslenkung der Rastnase (11, 11') und/oder des Rastarms (21, 21') aus der Verriegelungsposition durch ein Einschieben des zweiten Rohrteils (1) in den Aktuatorring (9, 9') und/oder den Verriegelungsring (7, 7') entlang der ersten Achse (B, B') zu erreichen, und/oder **dadurch gekennzeichnet, dass** das Führungselement zumindest einen sich parallel zu der ersten Achse (B, B') erstreckenden Bolzen (13, 13') umfasst und/oder vorzugsweise zumindest zwei, vorzugsweise auf gegenüberliegenden Seiten, der Rastnase (11, 11') angeordnete Führungselemente (13, 13') vorgesehen sind.

6. Verbindungseinrichtung nach einem der vorangehenden Ansprüche, **dadurch gekennzeichnet, dass**
die Kulisse (15, 15') zumindest eine Führungsbahn (17, 17'), auf der das Führungselement (13, 13') aufliegt, insbesondere mittels der durch den Federarm (21, 21') aufgebauten Federkraft in Kontakt mit der Führungsbahn (17, 17') gezwungen ist, umfasst, wobei vorzugsweise die Führungsbahn (17, 17') bezüglich einer Umfangsrichtung um die erste Achse (B, B') geneigt ist, insbesondere die Oberfläche der Führungsbahn (17, 17'), auf der das Führungselement (13, 13') aufliegt, in unterschiedlichen radialen Abständen zu der ersten Achse (B, B') verläuft, wobei insbesondere
die Neigung bezüglich der Umfangsrichtung um die erste Achse (B, B') zumindest bereichsweise 5° bis 40°, vorzugsweise 10° bis 35°, bevorzugt 15° bis 20°, noch bevorzugter 20° bis 25° und am bevorzugtesten 22° beträgt, die Führungsbahn (17, 17') gewölbt entlang der Umfangsrichtung um die erste Achse (B, B') ausgebildet ist und/oder die Neigung mit radialem Abstand zur ersten Achse (B, B') abnimmt, und/oder insbesondere
in der Oberfläche der Führungsbahn (17, 17') zumindest ein eine Parkposition der Verbindungseinrichtung (5, 5'), insbesondere des Verriegelungsrings (7, 7'), der Rastnase (11, 11'), des Rastarms (21, 21') und/oder des Führungselementes (13, 13'), bereitstellender Oberflächenkonturbereich (25, 25') ausgebildet ist, vorzugsweise die Oberfläche der Führungsbahn (17, 17') zur Bereitstellung der Parkposition bereichsweise ein gleichbleibenden radialen Abstand zu der ersten Achse (B, B') aufweist und/oder der Abstand der Oberfläche der Führungsbahn (17, 17') von der ersten Achse (B, B') von dem die Parkposition bereitstellenden Oberflächenkonturbereich (25, 25') ausgehend in beide Umfangsrichtungen der ersten Achse (B, B') zumindest bereichsweise zunimmt.

7. Verbindungseinrichtung nach einem der vorangehenden Ansprüche, **dadurch gekennzeichnet, dass**
der Aktuatorring (9, 9'), insbesondere die Kulisse (15, 15'), so ausgestaltet ist, dass der Aktuatorring (9, 9') zur überführung der Rastnase (11, 11') aus der Verriegelungs- in die Entriegelungsposition über einen Winkelbereich von 2° bis 12°, bevorzugt von 4° bis 10°, noch bevorzugter von 5° bis 9°, noch mehr bevorzugt von 6° bis 8° und am bevorzugtesten von 7° bewegt wird, und/oder **dadurch gekennzeichnet, dass**
der Rastarm (11, 11') zumindest bereichsweise in eine Richtung entlang der ersten Achse (B, B') durch die Kulisse (15, 15') abgestützt ist, insbesondere in einer Ebene senkrecht zu der ersten Achse (B, B') zumindest bereichsweise flächig auf einer Oberfläche der Kulisse (15, 15') aufliegt.

8. Verbindungseinrichtung nach einem der vorangehenden Ansprüche, **gekennzeichnet durch** zumindest eine Arretiereinrichtung (59") zur Arretierung, insbesondere drehsicheren Arretierung bezüglich der ersten Achse, des Aktuatorrings (9") relativ zu dem Verriegelungsring (7") in zumindest einer ersten Arretierposition, insbesondere der Parkposition, wobei die Arretierposition vorzugsweise der Entriegelungsposition der Rastnasen (11 ") entspricht, wobei insbesondere
die Arretiereinrichtung (59") zumindest ein mit einem ersten Element (7") drehmitnahmesicher verbundenes und/oder zumindest bereichsweise in dem ersten Element (7"), vorzugsweise in eine Richtung entlang der ersten Achse (B, B') bewegbar, gelagertes Arretierelement (61 ") umfasst, wobei ein zweites Element (9") mittels des Arretierelements (61") in der Arretierposition relativ zu dem ersten Element (7") arretiert ist, insbesondere das Arretierelement (61 ") Eingriff in eine Ausnehmung (69") des zweiten Elements (9") findet und/oder das Arretierelement (61") mittels zumindest einer Rückstelleinrichtung, wie zumindest einem Federelement (63"), in Eingriff mit der Ausnehmung (69") gezwungen ist, insbesondere
die Arretiereinrichtung (59") zumindest ein Auslöseelement (65") zur Lösung der Arretierung des Aktuatorrings (9") relativ zu dem Verriegelungsring (7"), insbesondere zur Bewegung des Arretierelements (61 ") aus dem Eingriff, vorzugsweise entgegen eine durch die Rückstelleinrichtung (63") aufgebaute Rückstellkraft, umfasst, und/oder insbesondere
das Auslöseelement (65") und das Arretierelement (61") zumindest bereichsweise einstückig ausgebildet sind.

9. Verbindungseinrichtung nach Anspruch 8, **dadurch gekennzeichnet, dass** das erste Element der Verriegelungsring (7") ist und das zweite Element der Aktuatorring (9") ist oder das erste Element der Aktuatorring ist und das zweite Element der Verrieglungsring ist, **dadurch gekennzeichnet, dass**
das Auslöseelement (61 ") zumindest bereichsweise auf einer dem Verriegelungsring (7") abgewandten Seite des Aktuatorrings (9") angeordnet ist, insbesondere das Auslöseelement (65") durch den Aktuatorring (7") zumindest bereichsweise hindurchreicht, vorzugsweise das Auslöseelement (65") mit dem zweiten Rohrteil (1) in Kontakt bringbar ist, insbesondere wenn die Arretiereinrichtung (59") sich in der Arretierposition befindet, und/oder **dadurch gekennzeichnet, dass**
der Aktuatorring (9") in der Arretierposition gegen die durch die durch die Rastarme (21") aufgebaute Federkraft gegenüber dem Verriegelungsring (7") vorgespannt ist.

10. Verbindungseinrichtung nach einem der vorangehenden Ansprüche, **dadurch gekennzeichnet, dass**
der Aktuatorring (9, 9') zumindest eine erste Markierung (37) und der Verriegelungsring (7) zumindest eine zweite Markierung (39, 39') aufweisen, wobei die erste Markierung (37) und die zweite Markierung (39) fluchtend zueinander angeordnet sind, wenn die Verbindungseinrichtung (5), insbesondere die Rastnase (11), sich in der Verrieglungsposition befindet, und/oder die erste Markierung (37) und die zweite Markierung (39) nicht fluchten, wenn sich die Verbindungseinrichtung (5), insbesondere die Rastnase (11), in der Entriegelungsposition, der Arretierposition und/oder der Parkposition befindet.

11. Verbindungseinrichtung nach einem der vorangehenden Ansprüche, **gekennzeichnet durch** zumindest einen koaxial zu dem Aktuatorring (9') und/oder dem Vernegelungsring (7') anordbaren Kontrollring (47'), wobei der Kontrollring (47') zumindest eine dritte Markierung (51') aufweist, wobei insbesondere die dritte Markierung (51') einerseits und die erste Markierung und/oder die zweite Markierung (39') andererseits in der Verriegelungsposition der Verbindungseinrichtung (5') miteinander fluchten und/oder in der Entriegelungsposition, der Arretierposition und/oder der Parkposition der Verbindungseinrichtung (5') nicht fluchten, wobei vorzugsweise ferner der Kontrollring (47') zumindest eine Ausnehmung (49') zur zumindest bereichsweisen Aufnahme des Führungselementes (13') und/oder des zweiten Endes der Rastnase (11') umfasst, wobei die Ausnehmung (49') vorzugsweise geneigt relativ zu einer radialen Richtung der ersten Achse (B, B') verläuft.

12. Verbindungseinrichtung nach einem der vorangehenden Ansprüche **gekennzeichnet durch**
zumindest einen koaxial zu dem Aktuatorring (9'), dem Verriegelungsring (7') und/oder dem Kontrollring (47') anordbaren Abschlussring (53'), wobei der Abschlussring (53') zumindest ein Federhammerelement (55') umfasst, das mittels des Führungselements (13') aus einer Ruheposition in eine Auslöse- und/oder Indikatorposition überführbar ist, wobei die Ruheposition bei Vorliegen der Verrieglungsposition der Verbindungseinrichtung (5') eingenommen wird und/oder die Auslöse- und/oder Indikatorposition bei Vorliegen der Entriegelungsposition, der Arretierposition und/oder der Parkposition der Verbindungseinrichtung (5') eingenommen wird, wobei vorzugsweise ferner das Federhammerelement (55') mittels einer federelastischen Lagerung in dem Abschlussring (53') gelagert ist, wobei mittels der Lagerung eine das Federhammerelement (55') in die Ruheposition zwingende Rückstellkraft aufbaubar ist, und/oder das Federhammerelement (55') in der Auslöse- und/oder Indikatorposition aus der Oberfläche des restlichen Bereichs des Abschlussrings (53') hervorsteht, wobei das Federhammerelement (55'), insbesondere in der Auslöse- und/oder Indikatorposition, derartig mit dem Führungselement und/oder Auslöseelement (65") in Wirkverbindung steht, insbesondere an diesem bzw. diesen anliegt, dass **durch** eine, vorzugsweise **durch** eine, insbesondere zur federelastischen Lagerung zusätzlichen, auf das Federhammerelement (55') wirkende Kraft hervorgerufene, Bewegung des Federhammerelements (55') aus der Auslöse- und/oder Indikatorposition in die Ruheposition das Führungselement aus der Parkposition, insbesondere in die Verriegelungsposition, und/oder das Arretierelement (61") aus der Arretierposition heraus bewegbar ist, wobei diese Bewegung vorzugsweise bei einer Bewegung des Abschlussrings (53') und/oder des Federhammerelements (55') gegen das Verbindungselement, insbesondere das erste Anschlagelement (4), erzeugbar ist, und/oder vorzugsweise ferner der Abschlussring (53') zumindest eine vierte Markierung (57') aufweist, wobei insbesondere die vierte Markierung (57') einerseits und die erste Markierung, die zweite Markierung (39') und/oder die dritte Markierung (51') andererseits in der Verriegelungsposition der Verbindungseinrichtung (5') miteinander fluchten und/oder in der Entriegelungsposition, der Arretierposition und/oder der Parkposition der Verbindungseinrichtung (5') nicht fluchten.

13. Verbindungseinrichtung nach Anspruch 11 oder 12, **dadurch gekennzeichnet, dass** die erste Markierung, die zweite Markierung, die dritte Markierung und/oder die vierte Markierung zumindest eine Vertiefung, zumindest eine Erhebung (37, 39, 39', 51', 57'), zumindest einen Aufdruck und/oder zumindest ein Relief umfasst.

14. Verbindungseinrichtung nach einem der vorangehenden Ansprüche, **dadurch gekennzeichnet, dass**
der Aktuatorring und/oder der Verriegelungsring (7, 7') zumindest eine Dichtvorrichtung (29, 29'), vorzugsweise umfassend zumindest einen O-Ring (29, 29'), umfasst und/oder mit der Dichtvorrichtung (29, 29') verbindbar ist, insbesondere zumindest eine Ausnehmung, wie zumindest eine Nut, zumindest eine Vertiefung (27, 27') und/oder zumindest einen Hinterschnitt zur Aufnahme der Dichtvorrichtung (29, 29') umfasst, und/oder **dadurch gekennzeichnet, dass**
die erste Verbindungvorrichtung, die zweite Verbindungsvorrichtung, die dritte Verbindungsvorrichtung und/oder die vierte Verbindungsvorrichtung zumindest eine Rastverbindung, zumindest eine Klemmverbindung, zumindest eine Adhäsionsverbindung, zumindest eine Clipsverbindung, zumindest eine Bajonettverbindung und/oder zumindest eine Schraubverbindung umfasst bzw. umfassen.

15. Verbindungssystem zur Verbindung zumindest zweier Rohrteile, umfassend zumindest eine mit zumindest einem ersten Rohrteil verbundene Verbindungseinrichtung (5, 5') nach einem der vorangehenden Ansprüche, und zumindest ein mit zumindest einem zweiten Rohrteil (1) verbindbare und/oder von dem zweiten Rohrteil (1) zumindest bereichsweise, vorzugsweise vollständig, umfasstes Verbindungselement (3, 4).

## Claims

1. A connecting device (5, 5') for connecting at least two pipe parts, wherein the connecting device (5, 5') is connected at least in portions to a first pipe part, and a detachable connection to at least one connecting element (3, 4) operatively connected to a second pipe part (1) can be produced by means of said connecting device (5, 5'), said connecting device (5, 5') comprising at least one locking ring (7, 7') with at least two elastically movable latching noses (11, 11') protruding in a radially inward direction of the locking ring (7, 7'), and at least one actuator ring (9, 9') for moving the latching noses (11, 11') out of at least one locking position, in which at least one of the latching noses (11, 11') is engaged in the connecting element (3), into at least one unlocking position in which the engagement is detached, and vice versa, wherein the respective latching nose (11, 11') is resiliently mounted at a first end on the locking ring (7, 7') via at least one latching arm (21, 21'), and a second end of the latching nose (11, 11') opposite the first end is freely movable, **characterized in that**
at least one guide element (13, 13') is arranged in the area of the second end of the respective latching nose (11, 11'), and the respective guide element (13, 13') is guided in at least one connecting link (15, 15') comprised by said actuator ring (9, 9') in such a way that the latching nose (11, 11') can be forced into the locking position by a spring force built up by the latching arm (21, 21') and can be forced out of the locking position into the unlocking position against the spring force by means of a movement of the actuator ring (9, 9') relative to the locking ring (7, 7') and/or of the locking ring (7, 7') relative to the actuator ring (9, 9').

2. The connecting device according to Claim 1, **characterized in that** the first pipe part can be connected to the actuator ring or the locking ring by means of at least a first connecting device, **characterized in that**
the connecting element (3) is connected to the second pipe part (1), in particular by means of at least a second connecting device, is formed at least in portions, preferably completely, in the second pipe part (1) and/or comprises at least one receptacle for the latching nose (11, 11'), comprising in particular at least one recess, at least one groove and/or at least one undercut (3), wherein the receptacle (3) is preferably formed completely circumferentially around the second pipe part (1), and/or **characterized in that** the connecting element comprises at least a first stop element (4) for the connecting device (5, 5'), in particular the locking ring (7, 7') and/or the actuator ring (9, 9'), preferably for limiting a movement of the connecting device (5, 5') in an axial direction along a first axis (B, B'), wherein the first axis preferably corresponds to a longitudinal axis of the first pipe part and/or the second pipe part and/or to an axis of symmetry (B, B') of the actuator ring (9, 9') relatively and/or of the locking ring (7, 7').

3. The connecting device according to any one of the preceding claims, **characterized in that** the locking ring (7') can be inserted and/or pushed at least in portions radially onto the outside of the actuator ring (9'), and/or can be arranged at least in portions on the actuator ring (9') so that it radially encloses the actuator ring (9'), or the actuator ring (9) can be inserted and/or pushed at least in portions radially onto the outside of the locking ring (7), and/or can be arranged at least in portions on the locking ring (7) so that it radially encloses the locking ring (7), wherein the actuator ring (9) and the locking ring (7) can preferably be connected to one another by means of at least a third connecting device (31), preferably such that a movement in an axial direction of the first axis (B, B') is prevented, and a rotational movement of the actuator ring (9, 9') is made possible relative to the locking ring (7, 7') about the first axis (B, B'), and/or **characterized in that** the locking ring (7') or the actuator ring can be opened and/or closed in at least one circumferential location (43') by means of at least a fourth connecting device, wherein preferably a plurality of individual segments of the locking ring or the actuator ring is provided, which can be connected to one another in particular via a plurality of fourth connecting devices.

4. The connecting device according to any one of the preceding claims, **characterized in that** the latching nose (11, 11') and/or the latching arm (21, 21') is/are supported at least in the locking position in one direction along the first axis (B, B') by at least a second stop element (34) comprised by the actuator ring (9, 9') and/or come(s) into contact with the second stop element (34) on building up a force on the connecting device (5, 5') in the direction of the first axis (B, B'), in particular the latching nose (11'), project(s) at least in the locking position, at least in portions, into at least one opening (41') formed in the actuator ring (9') and/or extend(s) through the opening (41'), and/or **characterized in that** the latching nose (11, 11') and/or the latching arm (21, 21') substantially extend(s) in a direction perpendicular to the first axis (B, B') and/or tangentially to a circumferential direction of the locking ring (7, 7') and/or actuator ring (9, 9').

5. The connecting device according to any one of the preceding claims, **characterized in that** the latching nose (11, 11') has at least one chamfer (45, 45') in a direction along the first axis (B, B'), in particular in order to achieve a deflection of the latching nose (11, 11') and/or the latching arm (21, 21') out of the locking position by insertion of the second pipe part (1) into the actuator ring (9, 9') and/or the locking ring (7, 7') along the first axis (B, B'), and/or **characterized in that**
the guide element comprises at least one bolt (13, 13') extending parallel to the first axis (B, B') and/or preferably at least two guide elements (13, 13') preferably arranged on opposite sides of the latching nose (11, 11') are provided.

6. The connecting device according to any one of the preceding claims, **characterized in that** the connecting link (15, 15') comprises at least one guide track (17, 17'), on which the guide element (13, 13') rests, is forced into contact with the guide track (17, 17') in particular by means of the spring force built up by the spring leg (21, 21'), wherein the guide track (17, 17') is preferably inclined with respect to a circumferential direction about the first axis (B, B'), in particular the surface of the guide track (17, 17'), on which the guide element (13, 13') rests, extends at different radial distances from the first axis (B, B'), wherein in particular
the inclination with respect to the circumferential direction about the first axis (B, B') is at least in portions 5° to 40°, especially 10° to 35°, preferably 15° to 20°, even more preferably 20° to 25° and most preferably 22°, the guide track (17, 17') is formed in a curve along the circumferential direction about the first axis (B, B') and/or the inclination decreases at a radial distance from the first axis (B, B'), and/or in particular in the surface of the guide track (17, 17') at least one surface contoured area (25, 25') providing a resting position of the connecting device (5, 5'), in particular of the locking ring (7, 7'), the latching nose (11, 11'), the latching arm (21, 21') and/or the guide element (13, 13') is formed, preferably the surface of the guide track (17, 17') for providing the resting position in portions is a consistent radial distance from the first axis (B, B') and/or the distance of the surface of the guide track (17, 17') from the first axis (B, B'), starting from the surface contoured area (25, 25') providing the resting position, increases at least in portions in both circumferential directions of the first axis (B, B').

7. The connecting device according to any one of the preceding claims, **characterized in that** the actuator ring (9, 9'), in particular the connecting link (15, 15'), is configured such that the actuator ring (9, 9') for transferring the latching nose (11, 11') is moved out of the locking position into the unlocking position via an angular range of 2° to 12°, preferably 4° to 10°, more preferably 5° to 9°, even more preferably 6° to 8° and most preferably 7°, and/or **characterized in that** the latching nose (11, 11') is supported by the connecting link (15, 15') at least in portions in a direction along the first axis (B, B'), and rests in particular in a plane perpendicular to the first axis (B, B') at least in portions planarly on a surface of the connecting link (15, 15').

8. The connecting device according to any one of the preceding claims, **characterized by** at least one arresting device (59') for arresting, in particular for arresting in a rotary drive-resistant manner with respect to the first axis, the actuator ring (9") relative to the locking ring (7") in at least a first arresting position, in particular the resting position, wherein the arresting position preferably corresponds to the unlocking position of the latching noses (11"), wherein in particular
the arresting device (59") comprises at least one arresting element (61 ") connected in a rotation-resistant manner to a first element (7") and/or which is movably mounted at least in portions in the first element (7"), preferably in a direction along the first axis (B, B'), wherein a second element (9") is arrested by means of the arresting element (61 ") in the arresting position relative to the first element (7"), in particular the arresting element (61") engages in a recess (69") of the second element (9") and/or the arresting element (61") is forced by means of at least one return means such as at least one spring element (63') into engagement with the recess (69"), in particular
the arresting device (59") comprises at least one releasing element (65") for detaching the arresting of the actuator ring (9") relative to the locking ring (7"), in particular for moving the arresting element (61 ") out of engagement preferably against a return force built up by the return means (63"), and/or in particular
the releasing element (65") and the arresting element (61") are formed integrally at least in portions.

9. The connecting device according to Claim 8, **characterized in that** the first element is the locking ring (7") and the second element is the actuator ring (9") or the first element is the actuator ring and the second element is the locking ring, **characterized in that**
the releasing element (61 ") is arranged at least in portions on one side of the actuator ring (9") facing away from the locking ring (7"), in particular the releasing element (65") extends at least in portions through the actuator ring (7"), preferably the releasing element (65") can be brought into contact with the second pipe part (1), in particular when the arresting device (59") is in the arresting position, and/or **characterized in that** the actuator ring (9") is biased in the arresting position against the spring force built up by the latching arms (21 ") with respect to the locking ring (7").

10. The connecting device according to any one of the preceding claims, **characterized in that** the actuator ring (9, 9') comprises at least a first mark (37) and the locking ring (7) comprises at least a second mark (39, 39'), wherein the first mark (37) and the second mark (39) are arranged so that they are aligned with one another, when the connecting device (5), in particular the latching nose (11), is located in the locking position, and/or the first mark (37) and the second mark (39) are not aligned, when the connecting device (5), in particular the latching nose (11), is in the unlocking position, the arresting position and/or the resting position.

11. The connecting device according to any one of the preceding claims, **characterized by** at least one control ring (47') which can be arranged coaxially to the actuator ring (9') and/or the locking ring (7'), wherein said control ring (47') comprises at least a third mark (51'), wherein in particular the third mark (51'), on the one hand, and the first mark and/or the second mark (39'), on the other hand, align with one another in the locking position of the connecting device (5') and/or do not align in the unlocking position, the arresting position and/or the resting position of the connecting device (5'), wherein in addition
the control ring (47') preferably comprises at least one recess (49') in order to receive at least in portions the guide element (13') and/or the second end of the latching nose (11'), wherein said recess (49') preferably extends at an inclination relative to a radial direction of the first axis (B, B').

12. The connecting device according to any one of the preceding claims **characterized by** at least one closing ring (53') which can be arranged coaxially to the actuator ring (9'), the locking ring (7') and/or the control ring (47'), wherein said closing ring (53') comprises at least one spring hammer element (55') which can be transferred out of a rest position into a release and/or indicator position by means of the guide element (13'), wherein the rest position is occupied when the connecting device (5') is in the locking position and/or the release and/or indicator position is occupied when the connecting device (5') is in the unlocking position, the arresting position and/or the resting position, wherein in addition the spring hammer element (55') is preferably mounted by means of an elastic support in the closing ring (53'), wherein a returning force forcing the spring hammer element (55') into the rest position can be built up by means of the support, and/or the spring hammer element (55') projects in the release and/or indicator position from the surface of the remaining portion of the closing ring (53'), wherein said spring hammer element (55') is operatively connected, in particular in the release and/or indicator position, to the guide element and/or releasing element (65"), in particular rests thereon such that by means of a movement, preferably by means of a movement of the spring hammer element (55) out of the release and/or indicator position into the rest position produced by a force, in particular a force acting on the spring hammer element (55') in addition to the elastic support, the guide element can be moved out of the resting position, in particular into the locking position, and/or the locking element (61") can be moved out of the locking position, wherein said movement can preferably be generated during a movement of the closing ring (53') and/or of the spring hammer element (55'), against the connecting element, in particular the first stop element (4), and/or in addition the closing ring (53') preferably comprises at least a fourth mark (57'), wherein in particular the fourth mark (57'), on the one hand, and the first mark, the second mark (39') and/or the third mark (39'), on the other hand, are aligned with one another in the locking position of the connecting device (51') and/or are not aligned in the unlocking position, the arresting position and/or the resting position of the connecting device (5').

13. The connecting device according to Claim 11 or 12, **characterized in that** the first mark, the second mark, the third mark and/or the fourth mark comprise(s) at least one recess, at least one elevation (37, 39, 39', 51', 57'), at least one imprint and/or at least one relief.

14. The connecting device according to any one of the preceding claims, **characterized in that** the actuator ring and/or the locking ring (7, 7') comprise(s) at least one sealing device (29, 29'), preferably comprising at least one O-ring (29, 29'), and/or which can be connected to the sealing device (29, 29'), comprise(s) in particular at least one recess such as at least one groove, at least one recess (27, 27') and/or at least one undercut for receiving the sealing device (29, 29'), and/or **characterized in that** the first connecting device, the second connecting device, the third connecting device and/or the fourth connecting device comprise(s) at least one latching connection, at least one clamping connection, at least one adhesive connection, at least one clip connection, at least one bayonet connection and/or at least one screw connection.

15. A connecting system for connecting at least two pipe parts, comprising at least one connecting device (5, 5') connected to at least a first pipe part according to any one of the preceding claims, and at least one connecting element (3, 4) which can be connected to at least a second pipe part (1) and/or comprised by the second pipe part (1) at least in portions, preferably completely.

## Revendications

1. Dispositif de jonction (5, 5') permettant de joindre au moins deux éléments tubulaires, dans lequel le dispositif de jonction (5, 5') est relié au moins partiellement à un premier élément tubulaire et, par l'intermédiaire du dispositif de jonction (5, 5'), une jonction amovible à l'aide d'au moins un élément de jonction (3, 4) en liaison fonctionnelle avec un deuxième élément tubulaire (1) peut être produite, le dispositif de jonction (5, 5') comportant au moins une bague de verrouillage (7, 7') ayant au moins deux taquets d'arrêt (11, 11') à mobilité élastique et dans la direction radiale intérieure desdites bagues de verrouillage (7, 7'), et au moins une bague d'actionnement (9, 9') permettant de déplacer les taquets d'arrêt (11, 11') d'au moins une position de verrouillage, dans laquelle au moins un des taquets d'arrêt (11, 11') est en prise dans l'élément de jonction (3), jusque dans au moins une position de déverrouillage dans laquelle il n'y a plus de prise, et inversement, dans lequel chaque taquet d'arrêt (11, 11') est monté de manière élastique au niveau d'une première extrémité sur la bague de verrouillage (7, 7') par le biais d'au moins un bras d'arrêt (21, 21'), et peut se déplacer librement mobile au niveau d'une deuxième extrémité du taquet d'arrêt (11, 11'), opposée à la première extrémité, **caractérisé en ce que**
au moins un élément de guidage (13, 13') est agencé dans la zone de la deuxième extrémité de chaque taquet d'arrêt (11, 11'), et chaque élément de guidage (13, 13') est guidé dans au moins une coulisse (15, 15') entourée par la bague d'actionnement (9, 9'), et de sorte que le taquet d'arrêt (11, 11') puisse être forcé en position de verrouillage par une force élastique produite par le bras d'arrêt (21, 21'), et puisse être forcé dans la position de déverrouillage à l'aide d'un mouvement de va-et-vient, opposé à la force élastique, de la bague d'actionnement (9, 9') par rapport à la bague de verrouillage (7, 7') et/ou de la bague de verrouillage (7, 7') par rapport à la bague d'actionnement (9, 9').

2. Dispositif de jonction selon la revendication 1, **caractérisé en ce que** le premier élément tubulaire peut-être joint à la bague d'actionnement ou à la bague de verrouillage à l'aide d'au moins un premier appareil de jonction, **caractérisé en ce que**
l'élément de jonction (3) est joint au deuxième élément tubulaire (1), en particulier au moyen d'au moins un deuxième appareil de jonction, est agencé au moins partiellement, de préférence totalement, dans le deuxième élément tubulaire (1), et/ou comporte au moins un logement pour le taquet d'arrêt (11, 11'), comprenant en particulier au moins une cavité, au moins une rainure et/ou au moins une contre-dépouille (3), le logement (3) étant réalisé de préférence s'étendant tout autour du deuxième élément tubulaire (1), /ou **caractérisé en ce que** l'élément de jonction présente au moins un premier élément de butée (4) pour le dispositif de jonction (5, 5'), en particulier la bague de verrouillage (7, 7') et/ou la bague d'actionnement (9, 9'), de préférence pour limiter un déplacement du dispositif de jonction (5, 5') dans une direction axiale le long d'un premier axe (B, B'), le premier axe correspondant de préférence à un axe longitudinal du premier élément tubulaire et/ou du deuxième élément tubulaire et/ou à un axe de symétrie (B, B') de la bague d'actionnement (9, 9') par rapport à la bague de verrouillage (7, 7'), et/ou de la bague de verrouillage (7, 7').

3. Dispositif de jonction selon l'une quelconque des revendications précédentes, **caractérisée en ce que**
la bague de verrouillage (7') peut être enfilée/emboîtée au moins partiellement, radialement à l'extérieur, sur la bague d'actionnement (9'), et/ou peut être disposée au moins partiellement sur la bague d'actionnement (9'), en entourant la bague d'actionnement (9') radialement, ou la bague d'actionnement (9) peut être enfilée/emboîtée au moins partiellement, radialement à l'extérieur, sur la bague de verrouillage (7'), et/ou peut être disposée au moins partiellement sur la bague de verrouillage (7), en entourant la bague de verrouillage (7) radialement, la bague d'actionnement (9) et la bague de verrouillage (7) étant jointes l'une à l'autre mutuellement de préférence au moyen d'au moins un troisième appareil de jonction (31), de telle sorte que de préférence, un déplacement dans une direction axiale du premier axe axe (B, B') est empêché, et un mouvement de rotation de la bague d'actionnement (9, 9') par rapport à la bague de verrouillage (7, 7') autour du premier axe (B, B') est rendu possible, et/ou **caractérisé en ce que** la bague de verrouillage (7') ou la bague d'actionnement (9') peut être ouverte et/ou fermée au niveau d'au moins un emplacement circonférentiel (43') au moyen d'au moins un quatrième appareil de jonction, de sorte que de préférence une multiplicité de segments individuels de la bague de verrouillage ou de la bague d'actionnement sont prévus, qui peuvent en particulier être reliés les uns aux autres au moyen d'une multiplicité de quatrièmes appareils de jonction.

4. Dispositif de jonction selon l'une quelconque des revendications précédentes, **caractérisée en ce que**
le taquet d'arrêt (11, 11') et/ou le bras d'arrêt (21, 21') est supporté, au moins dans la position de verrouillage dans une direction le long du premier axe (B, B'), par l'intermédiaire d'au moins un deuxième élément de butée (34) entouré par la bague d'actionnement (9, 9'), et/ou vient en contact avec le deuxième élément de butée (34) par l'application d'une force sur le dispositif de jonction (5, 5') dans la direction du premier axe (B, B'), en particulier le taquet d'arrêt (11'), au moins dans la position de verrouillage, fait saillie au moins partiellement dans au moins une ouverture (41') agencée dans la bague d'actionnement (9'), et/ou passe à travers l'ouverture (41'), et/ou **caractérisé en ce que**
le taquet d'arrêt (11, 11') et/ou le bras d'arrêt (21, 21') s'étendent dans une direction essentiellement perpendiculaire au premier axe (B, B') et/ou tangentielle à une direction circonférentielle de la bague de verrouillage (7, 7') et/ou de la bague d'actionnement (9, 9'),

5. Dispositif de jonction selon l'une quelconque des revendications précédentes, **caractérisé en ce que**
le taquet d'arrêt (11, 11') présente au moins un chanfrein (45, 45') dans une direction le long du premier axe (B, B'), en particulier pour obtenir une déviation du taquet d'arrêt (11, 11') et/ou du bras d'arrêt (21, 21') hors de la position de verrouillage par une insertion du deuxième élément tubulaire (1) dans la bague d'actionnement (9, 9') et/ou la bague de verrouillage (7, 7') le long du premier axe (B, B'), et/ou **caractérisé en ce que**
l'élément de guidage comporte au moins un boulon (13,13') s'étendant parallèlement au premier axe (B, B'), et/ou de préférence au moins deux éléments de guidage (13, 13') sont prévus, agencés de préférence sur des côtés opposés du taquet d'arrêt (11, 11').

6. Dispositif de jonction selon l'une quelconque des revendications précédentes, **caractérisé en ce que**
la coulisse (15, 15') comporte au moins une piste de guidage (17, 17'), sur laquelle repose l'élément de guidage (13, 13'), en particulier au moyen de laquelle la force élastique générée par le bras d'arrêt (21, 21') en contact avec la piste de guidage (17, 17') est empêchée, dans lequel, de préférence, la piste de guidage (17, 17') est inclinée par rapport à une direction circonférentielle autour du premier axe (B, B'), en particulier la surface supérieure de la piste de guidage (17, 17') repose sur l'élément de guidage (13, 13'), s'étendant à des distances radiales différentes par rapport au premier axe (B, B'), dans lequel en particulier
l'inclinaison par rapport à la direction circonférentielle autour du premier axe (B, B') est au moins par endroits de 5° à 40°, de préférence de 10° à 35°, de manière plus préférée de 15° à 20°, de manière encore plus préférée de 20° à 25°, et de la manière la plus préférée de 22°, la piste de guidage (17, 17') est réalisée bombée le long de la direction circonférentielle autour du premier axe (B, B'), et/ou l'inclinaison diminue en s'éloignant radialement du premier axe (B, B'), et/ou en particulier
dans la surface supérieure de la piste de guidage (17, 17') est prévue au moins une zone de contour de surface supérieure (25, 25') fournissant une position de rangement du dispositif de jonction (5, 5'), en particulier de la bague de verrouillage (7, 7'), du taquets d'arrêt (11, 11') et/ou de l'élément de guidage (13, 13'), de préférence la surface supérieure de la piste de guidage (17, 17'), pour fournir la position de rangement, présente au moins par endroits une distance radiale identique par rapport au premier axe (B, B'), et/ou la distance de la surface supérieure de la piste de guidage (17, 17') par rapport au premier axe (B, B') depuis la zone de contour de surface supérieure (25, 25') fournissant la position de rangement augmente au moins par endroits dans les deux directions circonférentielles du premier axe (B, B').

7. Dispositif de jonction selon l'une quelconque des revendications précédentes, **caractérisée en ce que**,
la bague d'actionnement (9, 9'), en particulier la coulisse (15, 15'), est conçue de telle sorte que la bague d'actionnement (9, 9'), pour guider le taquet d'arrêt (11, 11') depuis la position de verrouillage jusque dans la position de de verrouillage, va être déplacée sur une plage angulaire de 2 à 12°, de préférence de 4 à 10°, de manière plus préférée de 5 à 9°, de manière encore plus préférée de 6 à 8°, et de la manière la plus préférée de 7°, et/ou **caractérisé en ce que** le taquet d'arrêt (11, 11') est supporté au moins par endroits, dans une direction le long du premier axe (B, B'), par la coulisse (15, 15'), en particulier dans un plan perpendiculaire au premier axe (B, B'), au moins par endroits en appui sur une surface supérieure de la coulisse (15, 15').

8. Dispositif de jonction selon l'une quelconque des revendications précédentes, **caractérisé par**
au moins un dispositif d'arrêt (59"), destiné à arrêter, en particulier destiné à arrêter la rotation par rapport au premier axe, la bague d'actionnement (9") par rapport à la bague de verrouillage (7") dans au moins une première position d'arrêt, en particulier la position de rangement, la position d'arrêt correspondant de préférence à la position de verrouillage des taquets d'arrêt (11'), dans lequel en particulier
le dispositif d'arrêt (59") comporte au moins un élément d'arrêt (61") pouvant être joint de manière sûre en rotation à un premier élément (7"), et/ou disposé au moins partiellement dans le premier élément (7"), monté pouvant être déplacé de préférence dans une direction le long du premier axe (B, B'), un deuxième élément (9") est arrêté au moyen de l'élément d'arrêt (61") dans la position d'arrêt par rapport au premier élément (7"), l'élément d'arrêt (61") se trouve en particulier en prise dans le logement (69") du deuxième élément (9"), et/ou l'élément d'arrêt (61") est empêché de venir en prise avec le logementaus (69") à l'aide d'un dispositif de rappel, comme au moins un élément élastique (63"), et en particulier le dispositif d'arrêt (59") comporte au moins un élément de dégagement (65") pour dégager l'arrêt de la bague d'actionnement (9") par rapport à la bague de verrouillage (7"), en particulier pour déplacer l'élément d'arrêt (61") hors de prise, de préférence à l'encontre d'une force de rappel générée par le dispositif de rappel (63"), et/ou en particulier
l'élément de dégagement (65") et l'élément d'arrêt (61") sont réalisés au moins partiellement en un seul bloc.

9. Dispositif de jonction selon la revendication 8, **caractérisé en ce que** le premier élément est la bague de verrouillage (7") et le deuxième élément est la bague d'actionnement (9"), ou le premier élément est la bague d'actionnement et le deuxième élément est la bague de verrouillage, **caractérisé en ce que** l'élément de dégagement (61") est agencé au moins partiellement sur un côté de la bague d'actionnement (9") opposé à la bague de verrouillage (7"), en particulier l'élément de dégagement (65") passe au moins partiellement à travers la bague d'actionnement (7"), de préférence l'élément de dégagement (65") peut être amené en contact avec le deuxième élément tubulaire (1), en particulier lorsque le dispositif d'arrêt (59") se trouve dans la position d'arrêt, et/ou **caractérisé en ce que**
la bague d'actionnement (9") est précontrainte dans la position d'arrêt, à l'encontre de la force élastique générée par le bras d'arrêt (21"), contre la bague de verrouillage (7").

10. Dispositif de jonction selon l'une quelconque des revendications précédentes, **caractérisé en ce que**
la bague d'actionnement (9, 9') présente au moins une première marque (37), et la bague de verrouillage (7) présente au moins une deuxième marque (39, 39'), la première marque (37) et la deuxième marque (39) étant agencées alignées l'une par rapport à l'autre, lorsque le dispositif de jonction (5), en particulier le taquet d'arrêt (11), se trouve dans la position de verrouillage, et/ou la première marque (37) et la deuxième marque (39) ne sont pas alignées lorsque le dispositif de jonction (5), en particulier le taquet d'arrêt (11), se trouve dans la position de déverrouillage, la position d'arrêt et/ou la position de rangement.

11. Dispositif de jonction selon l'une quelconque des revendications précédentes, **caractérisé par**
au moins une bague de commande (47') pouvant être disposée coaxiale à la bague d'actionnement (9') et/ou la bague de verrouillage (7'), dans lequel la bague de commande (47') présente au moins une troisième marque (51'), dans lequel en particulier la troisième marque (51') d'une part, et la première marque et/ou la deuxième marque (39') d'autre part, sont alignées l'une par rapport à l'autre dans la position de verrouillage du dispositif de jonction (5'), et ne sont pas alignées l'une par rapport à l'autre dans la position de déverrouillage, la position d'arrêt et/ou la position de rangement du dispositif de jonction (5'), dans lequel de préférence en outre
la bague de commande (47') comporte au moins un logement (49') destiné à recevoir au moins partiellement l'élément de guidage (13') et/ou la deuxième extrémité du taquet d'arrêt (11'), dans lequel le logement (49') s'étend de préférence incliné par rapport à une direction radiale du premier axe (B, B').

12. Dispositif de jonction selon l'une quelconque des revendications précédentes, **caractérisé par**
au moins une bague de fermeture (53') pouvant être agencée coaxiale à la bague d'actionnement (9'), la bague de verrouillage (7') et/ou la bague de commande (47'), dans lequel la bague de fermeture (53') présente au moins un élément de marteau à ressort (55'), qui peut être guidé au moyen de l'élément de guidage (13') depuis une position de repos juste que dans une position de dégagement et/ou d'indicateur, dans lequel la position de repos va être prise en ayant le dispositif de jonction (5') dans la position de verrouillage, et/ou la position de dégagement et/ou d'indicateur va être prise en ayant le dispositif de jonction (5') dans la position de déverrouillage, la position d'arrêt et/ou la position de rangement, dans lequel de préférence, en outre,
l'élément de marteau à ressort (55') est disposé dans la bague de fermeture (53') par stockage élastique à ressort, dans lequel au moyen dudit stockage, une force de rappel contraignant l'élément de marteau à ressort (55') dans la position de repos peut être générée, et/ou l'élément de marteau à ressort (55') fait saillie dans la position de dégagement et/ou d'indicateur depuis la surface supérieure de la zone restante de la bague de fermeture (53'), dans lequel l'élément de marteau à ressort (55'), en particulier dans ladite position de dégagement et/ou position d'indicateur, est en liaison fonctionnelle avec l'élément de guidage et/ou l'élément de dégagement (65"), en particuliers repose sur celui-ci ou ceux-ci, et **caractérisé par**, au moyen d'une force, de préférence au moyen d'une force agissant sur l'élément de marteau à ressort (55"), en particulier pour supporter un stockage élastique à ressort, un déplacement de l'élément de marteau à ressort (55') depuis la position de dégagement et/ou d'indicateur, dans la position de repos de l'élément de guidage à l'extérieur de la position de rangement, en particulier dans la position de verrouillage, et/ou par l'élément d'arrêt (61") qui peut être déplacé depuis la position d'arrêt vers l'extérieur, de sorte que ce déplacement, de préférence par l'intermédiaire d'un déplacement de la bague de fermeture (53') et/ou de l'élément de marteau à ressort (55') contre l'élément de jonction, en particulier le premier élément de butée (4) peut être produit, et/ou de préférence, en outre,
la bague de fermeture (53') présente au moins une quatrième marque (57'), dans lequel en particulier la quatrième marque (57') d'une part, et la première marque, la deuxième marque (39') et/ou la troisième marque (51') d'autre part, sont alignées mutuellement dans la position de verrouillage du dispositif de jonction (5'), et/ou ne sont pas alignées mutuellement dans la position de déverrouillage, la position d'arrêt et/ou la position de rangement du dispositif de jonction (5').

13. Dispositif de jonction selon la revendication 11 12, **caractérisé en ce que**
la première marque, la deuxième marque, la troisième marque et/ou la quatrième marque comportent au moins une cavité, au moins une saillie (37, 39, 39', 51', 57'), au moins une empreinte et/ou au moins un relief.

14. Dispositif de jonction selon l'une quelconque des revendications précédentes, **caractérisé en ce que**
la bague d'actionnement et/ou la bague de verrouillage (7, 7') comporte au moins un dispositif d'étanchéité (29, 29'), comprenant de préférence au moins un joint torique (29, 29'), et/ou peut-être jointe au dispositif d'étanchéité, et comporte en particulier au moins un logement, comme au moins un écrou, au moins une cavité (27, 27') et/ou au moins une contre-dépouille pour recevoir le dispositif d'étanchéité (29, 29'), et/ou **caractérisé en ce que**
le premier appareil de jonction, le deuxième appareil de jonction, le troisième appareil de jonction et/ou le quatrième appareil de jonction comportent au moins une jonction par encliquetage, au moins une jonction par serrage, au moins une jonction par mise en adhérence, au moins une jonction par sertissage, au moins une jonction à baïonnette et/ou au moins une jonction à vis.

15. Système de jonction pour la jonction d'au moins deux éléments tubulaires, comprenant au moins un dispositif de jonction (5, 5') joint au moins un premier élément tubulaire selon l'une quelconque des revendications précédentes, et au moins un élément de jonction (3, 4) pouvant être joint à au moins un deuxième élément tubulaire (1) et/ou entouré au moins partiellement, de préférence totalement, par le deuxième élément tubulaire (1).
